# EUROPEAN PATENT APPLICATION

(11) **EP 4 782 240 A1**
(43) Date of publication of application: **29.07.2026**
(21) Application number: 24869861.5
(22) Date of filing: 17.06.2024
(51) Int. Cl.: B60K 1/04

(54) **ELECTRIC ALL-TERRAIN VEHICLE**

(30) Priority: 28.09.2023 CN 202311282682
(71) Applicant: Zhejiang CFMOTO Power Co., Ltd., Hangzhou, Zhejiang 311199 (CN)
(72) Inventor: JIANG, Xiaolu, Hangzhou, Zhejiang 311199 (CN); TANG, Yang, Hangzhou, Zhejiang 311199 (CN); CHEN, Xiangyang, Hangzhou, Zhejiang 311199 (CN); ZHOU, Zhenyu, Hangzhou, Zhejiang 311199 (CN); BI, Feng, Hangzhou, Zhejiang 311199 (CN); YOU, Zihao, Hangzhou, Zhejiang 311199 (CN)
(74) Representative: Sun, Yiming
(86) International application number: PCT/CN2024/099540
(87) International publication number: WO 2025/066299

(57) **Abstract**

The present application discloses an electric all-terrain vehicle. The electric all-terrain vehicle includes a frame, a powertrain, a transmission system, a travel members, a seat assembly, and a battery assembly. A reference plane is defined, a projection of the seat assembly on the reference plane along the height direction of the electric all-terrain vehicle is defined as a seat projection, a projection of the power battery on the reference plane is defined as a battery projection. The ratio of the area of the portion of the battery projection overlaps the seat projection to the area of the seat projection is greater than or equal to 0.52 and less than or equal to 1. The drive assembly includes a drive motor and a reducer, the reducer is connected to the drive motor and the rear drive axle in a transmission mode. A longitudinal plane is defined, the drive motor is located on one side of the longitudinal plane, and the minimum distance between the drive motor and the longitudinal plane is greater than or equal to 70 mm and less than or equal to 140 mm. The above arrangement can reduce the impact of installing the power battery on the driving space, thereby improving the layout compactness and driving comfort of the electric all-terrain vehicle.

## Description

### RELATED APPLICATION INFORMATION

The present application claims priority to Chinese patent application No. 202311282682.5, filed on September 28, 2023, for the invention entitled "Electric all-terrain vehicle", the entire contents of which are incorporated herein by reference.

### FIELD OF THE DISCLOSURE

The present application relates to the technical field of motor vehicles, and in particular to an electric all-terrain vehicle.

### BACKGROUND OF THE DISCLOSURE

With the development of vehicle electrification, certain all-terrain vehicles powered by electricity have emerged. However, during the electrification process of all-terrain vehicles, several problems still remain. The power battery is an important component and energy source of an electric all-terrain vehicle. The configuration and placement of the power battery not only affect the driving operation of the electric all-terrain vehicle, but also affect the space utilization of the electrical components and transmission components within the electric all-terrain vehicle.

### SUMMARY OF THE INVENTION

In the embodiments of the present application, an electric all-terrain vehicle is provided to address at least one problem existing in the background art.

In a first aspect, an embodiment of the present application provides an electric all-terrain vehicle. The electric all-terrain vehicle includes a frame, a powertrain, a transmission system, travel members, a seat assembly, and a battery assembly. The powertrain includes a drive assembly, and the drive assembly is supported by the frame. The transmission system includes a front drive axle, a rear drive axle, and a propeller shaft. The drive assembly is connected to the front drive axle in a transmission mode via the propeller shaft. The travel members includes a pair of front wheels and a pair of rear wheels at least partially located below the frame. The seat assembly is connected to the frame. The battery assembly includes a power battery for providing energy to the powertrain. A reference plane perpendicular to the height direction of the electric all-terrain vehicle is defined. A projection of the seat assembly on the reference plane along the height direction of the electric all-terrain vehicle is defined as a seat projection. A projection of the power battery on the reference plane along the height direction of the electric all-terrain vehicle is defined as a battery projection. The seat projection is at least partially located in front of the battery projection. A ratio of the area of the portion of the battery projection overlaps the seat projection to the area of the seat projection is greater than or equal to 0.52 and less than or equal to 1. The drive assembly includes a drive motor and a reducer. The reducer is connected to the drive motor and the rear drive axle in a transmission mode, and the reducer is further connected to a propeller shaft in a transmission mode to transmit a driving force generated by the drive assembly to the front drive axle. A longitudinal plane is defined perpendicular to the width direction of the electric all-terrain vehicle and passing through a center of the width of the electric all-terrain vehicle. The drive motor is located on one side of the longitudinal plane. The minimum distance between the drive motor and the longitudinal plane is greater than or equal to 70 mm and less than or equal to 140 mm.

In a second aspect, an embodiment of the present application provides an electric all-terrain vehicle. The electric all-terrain vehicle includes a frame, a drive assembly, a transmission system, travel members, and a power battery. The drive assembly is supported by the frame. The drive assembly includes a drive motor and a reducer connected to the drive motor in a transmission mode. The transmission system includes a front drive axle, a rear drive axle, and a propeller shaft. The propeller shaft is connected to the front drive axle in a transmission mode and the rear drive axle is connected to a reducer in a transmission mode. The travel members includes a pair of front wheels and a pair of rear wheels that are at least partially located below the frame. The power battery is configured to supply electric energy to the drive motor. The reducer is connected with both the drive motor and the rear drive axle in a transmission mode, and the reducer is further connected to the propeller shaft in a transmission mode so as to transmit the driving force generated by the powertrain to the front drive axle. A longitudinal plane is defined perpendicular to the width direction of the electric all-terrain vehicle and passing through a center of the width of the electric all-terrain vehicle. The longitudinal plane at least partially passes across the reducer and the rear drive axle. A ratio of the distance between the leftmost end of the reducer and the longitudinal plane to the distance between the rightmost end of the reducer and the longitudinal plane is greater than or equal to 0.66 and less than or equal to 0.8. The drive motor is located on one side of the longitudinal plane, and the leftmost end of the reducer is fixedly connected to the drive motor. The minimum distance between the leftmost end of the reducer and the longitudinal plane is greater than or equal to 70 mm and less than or equal to 140 mm.

In a third aspect, an embodiment of the present application provides an electric all-terrain vehicle. The electric all-terrain vehicle includes a frame, a powertrain, a transmission system, travel members, a seat assembly, and a battery assembly. The powertrain is supported by the frame. The transmission system is connected to the powertrain in a transmission mode. The travel members includes a pair of front wheels and a pair of rear wheels, at least partially located below the frame. The seat assembly is connected to the frame. The battery assembly includes a power battery for providing energy to the powertrain. A reference plane perpendicular to the height direction of the electric all-terrain vehicle is defined. A projection of the seat assembly on the reference plane along the height direction of the electric all-terrain vehicle is defined as a seat projection. A projection of the power battery on the reference plane along the height direction of the electric all-terrain vehicle is defined as a battery projection. The seat projection is at least partially located in front of the battery projection. The ratio of the area of the portion of the battery projection overlaps the seat projection to the area of the seat projection is greater than or equal to 0.52 and less than or equal to 1.

In a fourth aspect, an embodiment of the present application provides an electric all-terrain vehicle. The electric all-terrain vehicle includes a frame, a powertrain, a transmission system, travel members, a seat assembly, a battery assembly, and a cargo box assembly. The powertrain includes a drive assembly. The transmission system is connected to the powertrain in a transmission mode. The travel members includes a pair of front wheels and a pair of rear wheels, at least partially located below the frame. The seat assembly is connected to the frame. The battery assembly includes a power battery for providing energy to the powertrain. The cargo box assembly is located at a rear portion of the frame and is connected to the frame. A reference plane perpendicular to the height direction of the electric all-terrain vehicle is defined. A projection of the seat assembly on the reference plane along the height direction of the electric all-terrain vehicle is defined as a seat projection. A projection of the power battery on the reference plane along the height direction of the electric all-terrain vehicle is defined as a battery projection. The seat projection is at least partially located in front of the battery projection. The ratio of the area of the portion of the battery projection overlaps the seat projection to the area of the seat projection is greater than or equal to 0.52 and less than or equal to 1. The electric all-terrain vehicle further includes a power charging and distributing device. The power charging and distributing device is integrally provided with a charging unit for converting alternating current power to direct current power, a conversion unit for converting high voltage power to low voltage power, and a power distributing unit for supplying power. The power charging and distributing device is electrically connected to the power battery and the drive motor, respectively. The charging and distributing device is located above the drive motor, the charging and distributing device is located on the rear side of the power battery, and the charging and distributing device is also located below the cargo box assembly.

Compared with the related art, the electric all-terrain vehicle provided in the present embodiment can make full use of the space between the seat assembly and the frame. This arrangement reduces the impact of installing the power battery on the driving space, thereby improving the compactness of the vehicle layout and enhancing driving comfort.

Details of one or more embodiments of the present application are set forth in the following accompanying drawings and description to make other features, objectives and advantages of the present application more concise and understandable.

### BRIEF DESCRIPTION OF THE DRAWINGS

The accompanying drawings described herein are used to provide a further understanding of the present application and form a part of the present application. The illustrative embodiments and their descriptions of the application are used to explain the present application and are not to be construed as unduly limiting the scope of the present application. In the accompanying drawings:
FIG. 1 is a perspective view of an electric all-terrain vehicle in accordance with embodiments of the present application;
FIG. 2 is a top view of a frame and a power battery of the electric all-terrain vehicle in accordance with embodiments of the present application;
FIG. 3 is a view of the structure of the seat assembly and the power battery in accordance with embodiments of the present application;
FIG. 4 is a perspective view of one view of the temperature control device and the power battery in accordance with embodiments of the present application;
FIG. 5 is a perspective view of another view of the temperature control device and the power battery in accordance with embodiments of the present application;
FIG. 6 is a cross-sectional view of a seat assembly and a power battery in accordance with embodiments of the present application;
FIG. 7 is a partial schematic view of the structure of a control system in accordance with embodiments of the present application;
FIG. 8 is a top view of the structure of a drive assembly, a transmission system, and travel members in accordance with embodiments of the present application;
FIG. 9 is a cross-sectional view of a reducer and a drive motor in accordance with embodiments of the present application;
FIG. 10 is a perspective view of the structure of a support cradle, a drive motor, a reducer and a frame in accordance with embodiments of the present application;
FIG. 11 is a perspective view of the structure of a first hanging member, a drive motor and a reducer in an assembled state in accordance with embodiments of the present application;
FIG. 12 is a perspective view of the structure of a second hanging member, a drive motor and a reducer in an assembled state in accordance with embodiments of the present application;
FIG. 13 is a view of the structure of a third hanging member, a drive motor and a reducer in an assembled state in accordance with embodiments of the present application;
FIG. 14 is a perspective view of the position of the power battery, the temperature control device, the driving motor and the charging and distributing device in an assembled state in accordance with embodiments of the present application;
FIG. 15 is a view of the position of the cargo box assembly, the charging and distributing device and the driving motor in an assembled state in accordance with embodiments of the present application;
FIG. 16 is a top view of the structure of the power battery, the frame and the charging and distributing bracket in an assembled state in accordance with embodiments of the present application;
FIG. 17 is a perspective view of the structure of the frame and the charging and distributing bracket in an assembled state from another viewpoint in accordance with embodiments of the present application;
FIG. 18 is a perspective view of the structure of a charging and distributing bracket, a charging and distributing device, and a driving motor in an assembled state in accordance with embodiments of the present application;
FIG. 19 is a rear view of the position of a cargo box assembly, a charging port, and a shock absorber in an assembled state in accordance with embodiments of the present application;
FIG. 20 is a side view of the position of the cargo box assembly, the charging port, and the shock absorber in an assembled state in accordance with embodiments of the present application.

### DETAIL DESCRIPTION

The present invention will be described in detail below with reference to specific embodiments shown in the accompanying drawings. However, these embodiments are not intended to limit the present invention, and structural, methodological, or functional modifications made by those of ordinary skill in the art based on these embodiments shall fall within the scope of protection of the present invention.

It should be noted that when an element is described as being "disposed on" another element, it may be directly on the other element or may be disposed on an intermediate element located therebetween. When an element is described as being "connected to " another element, it may be directly connected to the other element or may be connected via an intermediate element. The terms "vertical," "horizontal," "left," "right," and similar expressions used herein are for illustrative purposes only and are not intended to limit the embodiments of the present application.

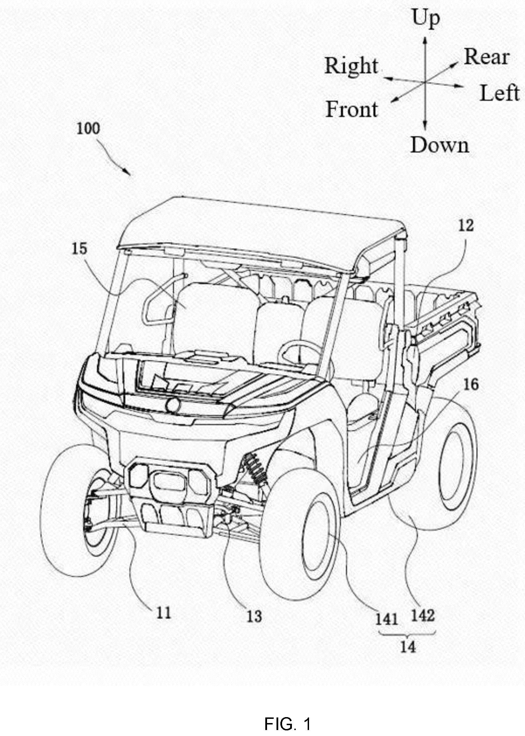

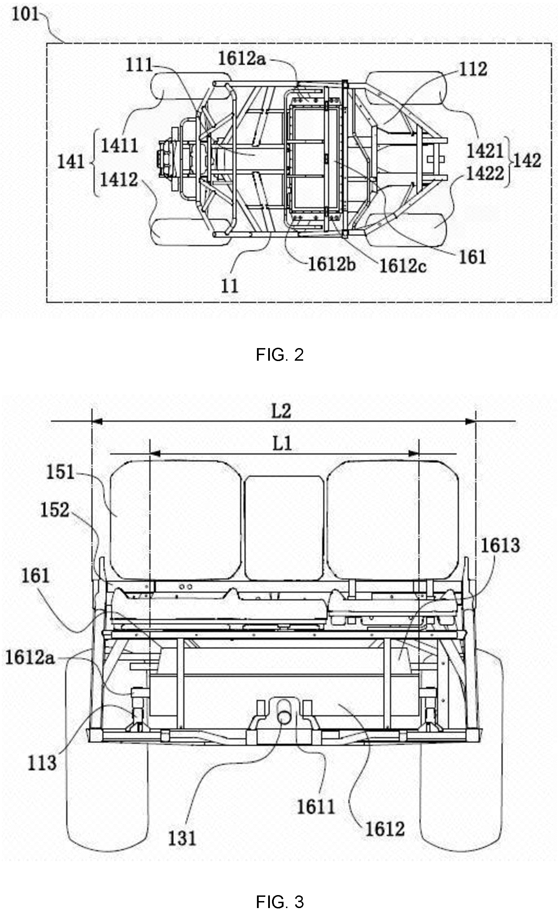

The present application provides an electric all-terrain vehicle 100 as shown in FIGS. 1 and 2, which includes a frame 11, a powertrain 12, a transmission system 13, travel members 14, and a seat assembly 15. The frame 11 defines a passenger cabin 111 and a rear cabin 112. The passenger cabin 111 is used to accommodate the driver and passengers. The rear cabin 112 is disposed substantially behind the passenger cabin 111, the rear cabin 112 is mainly used to house and support the powertrain 12. The travel members 14 include a pair of front wheels 141 and a pair of rear wheels 142. The powertrain 12 is connected to at least one of the front wheels 141 or the rear wheels 142 via the transmission system 13, and the powertrain 12 transmits power to at least one of the front wheels 141 or the rear wheels 142 via transmission system 13. The seat assembly 15 is disposed within the passenger cabin 111 for providing support for the driver and passengers, and the seat assembly 15 includes at least two seats 151 disposed side-by-side in a width direction of the electric all-terrain vehicle 100. In order to clearly delimit the technical embodiment of this application, a front side, a rear side, a left side, a right side, an upper side, and a lower side, as shown in FIG. 1, are also defined.

In the description of this application, it is to be understood that the term "length direction" refers to the front -rear direction of the vehicle when the driver is driving, the term "width direction" refers to the left-right direction of the vehicle when the driver is driving, and the term "height direction" refers to the up-down direction of the vehicle when the driver is driving.

As shown in FIG. 1, FIG. 2, and FIG. 3, the transmission system 13 includes a propeller shaft 131 extending in a length direction of the electric all-terrain vehicle 100. The powertrain 12 is connected to the front wheels 141 in a transmission mode via the propeller shaft 131, so that the powertrain 12 can drive the electric all-terrain vehicle 100 to move. As an embodiment, the front wheels 141 includes a first front wheel 1411 and a second front wheel 1412 disposed in width direction of the electric all-terrain vehicle 100, and the rear wheels 142 includes a first rear wheel 1421 and a second rear wheel 1422 disposed in width direction of the electric all-terrain vehicle 100. The transmission system 13 includes a front drive axle 132 at least partially disposed between the first front wheel 1411 and the second front wheel 1412 and a rear drive axle 133 at least partially disposed between the first rear wheel 1421 and the second rear wheel 1422. The electric all-terrain vehicle 100 further includes a battery assembly 16, the battery assembly 16 including a power battery 161. The power battery 161 can provide energy to the powertrain 12. As an embodiment, the power battery 161 can be a lithium battery. The power battery 161 is at least partially disposed on the frame 11 and extends substantially in the width direction of the electric all-terrain vehicle 100. The power battery 161 is disposed between the front drive axle 132 and the rear drive axle 133. The seat assembly 15 includes the seats 151 and a seat bracket 152 that attaches the seats 151 to the frame 11. A receiving space is defined between the seat bracket 152 and the frame 11, and the power battery 161 is at least partially disposed in the receiving space. This arrangement addresses the issue of limited installation space for the power battery 161. In addition, the seat bracket 152 can provide protection for the power battery 161, avoiding damage to the power battery 161 caused by impacts during driving of the electric all-terrain vehicle 100, and improving the safety and service life of the power battery 161. The propeller shaft 131 at least partially passes through the receiving space and is at least partially disposed below the power battery 161.

As an embodiment, a recessed accommodation portion 1611 is defined below the power battery 161. The accommodation portion 1611 extends substantially throughout the power battery 161 along the length direction of the electric all-terrain vehicle 100. The propeller shaft 131 is at least partially disposed within the accommodation portion 1611. When viewed along the height direction of the electric all-terrain vehicle 100, the propeller shaft 131 at least partially overlaps the power battery 161. When viewed along the width direction of the electric all-terrain vehicle 100, the propeller shaft 131 at least partially overlaps the power battery 161. A reference plane 101 is defined as being perpendicular to the height direction of the electric all-terrain vehicle 100. The projection of the seat assembly 15 on the reference plane 101 along the height direction of the electric all-terrain vehicle 100 is defined as a seat projection. The projection of the power battery 161 on the reference plane 101 along the height direction of the electric all-terrain vehicle 100 is defined as a battery projection. The seat projection is at least partially located in front of the battery projection. In this way, the power battery 161 can be prevented from protruding forward from the front end of the seat assembly 15, thereby avoiding the occupation of the leg placement space of the driver and passenger, and improving the comfort of the electric all-terrain vehicle 100. When the power battery 161 has a relatively large size, the power battery 161 may also be positioned at least partially at the rear of the seat assembly 15, provided that the installation of other components is not adversely affected. This arrangement ensures a proper weight distribution of the power battery 161 within the electric all-terrain vehicle 100, improves the overall uniformity of the weight distribution of the electric all-terrain vehicle 100, and further enhances the space utilization rate of the electric all-terrain vehicle 100.

As an embodiment, a ratio of the area of the portion of the battery projection overlaps the seat projection to the area of the battery projection is greater than or equal to 0.65 and less than or equal to 1. As an embodiment, the ratio of the area of the portion of the battery projection overlaps the seat projection to the area of the battery projection is greater than or equal to 0.72 and less than or equal to 0.9. As an embodiment, the ratio of the area of the portion of the battery projection overlaps the seat projection to the area of the battery projection is greater than or equal to 0.78 and less than or equal to 0.8. This arrangement prevents the ratio of the area of the portion of the battery projection overlaps the seat projection to the area of the battery projection from being too small. This avoids positioning the power battery 161 excessively rearward, which would occupy space reserved for other components. Consequently, the compact arrangement of the power battery 161 is improved, enhancing space utilization in the electric all-terrain vehicle 100.

As an embodiment, the ratio of the area of the portion of the battery projection overlaps the seat projection to the area of the seat projection is greater than or equal to 0.52 and less than or equal to 1. As an embodiment, the ratio of the area of the portion of the battery projection overlaps the seat projection to the area of the seat projection is greater than or equal to 0.6 and less than or equal to 0.9. As an embodiment, the ratio of the area of the portion of the battery projection overlaps the seat projection to the area of the seat projection is greater than or equal to 0.67 and less than or equal to 0.83. Therefore, more portions of the power battery 161 are located in the space below the seat assembly 15, improving the space utilization between the seat assembly 15 and the frame 11. At the same time, the power battery 161 occupies less or even no space outside the seat assembly 15, improving the compactness of the layout of the power battery 161 and enhancing the rationality of the internal space layout of the electric all-terrain vehicle 100.

As shown in FIG. 2, the area enclosed by sequentially connecting the center points of the first front wheel 1411, the second front wheel 1412, the first rear wheel 1421, and the second rear wheel 1422 is defined as the wheel area. The battery projection is substantially located within the wheel area, and a ratio of the area of the battery projection to the area of the wheel area is greater than or equal to 0.09 and less than or equal to 0.17. As an embodiment, the ratio of the area of the battery projection to the area of the wheel area is greater than or equal to 0.1 and less than or equal to 0.16. As an embodiment, the ratio of the area of the battery projection to the area of the wheel area is greater than or equal to 0.12 and less than or equal to 0.14. The battery projection is located in the wheel area, which can ensure the stability of the placement of the power battery 161 on the electric all-terrain vehicle 100. The size limitation of the battery projection avoids the power battery 161 from crowding the space of other components when the battery projection is too large, reduces the weight of the electric all-terrain vehicle 100, thereby facilitates the compact arrangement of the electric all-terrain vehicle 100. It also prevents the battery projection from being too small and reducing the size of the power battery 161, which ensure the range of the electric all-terrain vehicle 100. It is to be explained in this application that a plane of symmetry perpendicular to the width direction of the electric all-terrain vehicle 100 and substantially bisecting the first front wheel 1411 is defined. The center point of the first front wheel 1411 is defined as the intersection between the symmetry plane of the first front wheel 1411 and the rotational axis of the first front wheel 1411. It is understood that the center point of the second front wheel 1412 is defined as the intersection between the symmetry plane of the second front wheel 1412 in the width direction and the rotational axis of the second front wheel 1412. Likewise, the center point of the first rear wheel 1421 and the center point of the second rear wheel 1422 are defined in the same manner, and further description is omitted herein.

As shown in FIG. 2 and FIG. 3, the projection of the frame 11 on the reference plane 101 along the height direction of the electric all-terrain vehicle 100 is defined as a frame projection. A ratio of a maximum length L1 occupied by the battery projection in the width direction of the electric all-terrain vehicle 100 to a maximum length L2 occupied by the frame projection in the width direction of the electric all-terrain vehicle 100 is greater than or equal to 0.5 and less than or equal to 1. As an embodiment, the ratio of a maximum length L1 occupied by the battery projection in the width direction of the electric all-terrain vehicle 100 to a maximum length L2 occupied by the frame projection in the width direction of the electric all-terrain vehicle 100 is greater than or equal to 0.6 and less than or equal to 0.9. As an embodiment, the ratio of a maximum length L1 occupied by the battery projection in the width direction of the electric all-terrain vehicle 100 to a maximum length L2 occupied by the frame projection in the width direction of the electric all-terrain vehicle 100 is greater than or equal to 0.7 and less than or equal to 0.8. This arrangement enables the power battery 161 to efficiently utilize space in the left -right direction of the electric all-terrain vehicle 100. The power battery 161 minimizes its spatial occupancy in front-rear direction while maintaining range and volume. Furthermore, the power battery 161 is substantially positioned below the seat assembly 15. Therefore, space below the seat assembly 15 is optimally utilized, reducing the interference of the power battery 161 with the installation of other components of the electric all-terrain vehicle 100.

As shown in FIG. 2 and FIG. 3, as one embodiment, the power battery 161 includes a battery housing and a battery module disposed inside the battery housing. As an optional embodiment, the battery housing may include a lower housing 1612 and an upper housing 1613 distributed along the height direction of the electric all-terrain vehicle 100. The lower housing 1612 and the upper housing 1613 are connected to form a containment cavity for protecting the battery module. The lower housing 1612 forms a fixed connection with the frame 11. When the power battery 161 is impacted by an external force, the lower housing 1612 and the upper housing 1613 can provide protection for the battery module to avoid damage to the battery module, improving the safety and service life of the battery module. As previously mentioned, the propeller shaft 131 is at least partially disposed below the power battery 161. And as an optional embodiment, the lower end of the lower housing 1612 is recessed upwardly to form the accommodation portion 1611, with the propeller shaft 131 at least partially disposed within the accommodation portion 1611. As an embodiment, the inner contour of the accommodation portion 1611 may be configured to substantially conform to the outer contour of the propeller shaft 131, increasing the space utilization of the accommodation portion 1611. This arrangement allows the installation position of the power battery 161 to be lowered without altering the overall transmission configuration of the vehicle, which effectively reduce the center of gravity of vehicle and improve stability, and also sufficiently ensure clearance within the installation range of the propeller shaft 131. As an embodiment, the lower housing 1612 is provided with a mount 1612a for attachment to the frame 11, and the mount 1612a is provided with a plurality of connecting portions 1612b for attachment to the frame 11 and a plurality of lifting portions 1612c for lifting. The lifting portions 1612c can be used to connect with an external tool to enable removal or positional replacement of the power battery 161. The mount 1612a is located on the side of the lower housing 1612. The frame 11 is provided with a battery base 113, and when the power battery 161 is in a coupled state with the frame 11, the mount 1612a resists the battery base 113. The connecting portions 1612b of the power battery 161 are connected to the battery base 113 via a fastener, which in turn connects the power battery 161 to the frame 11. In the actual installation process, the installation of the power battery 161 as a whole is completed by snapping the connecting portions 1612b onto the battery base 113, and then securing the connecting portions 1612b to the battery base 113 by fasteners. The arrangement of the connecting portions 1612b and the battery base 113 increases the contact area and the number of contact points between the lower housing 1612 and the frame 11. This configuration prevents relative movement between the lower housing 1612 and the frame 11, thereby enhancing the connection strength between the power battery 161 and the frame 11 and further improving the operational stability of the power battery 161. The connecting portions 1612b and the lower housing 1612 may be integrally molded, that is, the connecting portions 1612b are manufactured simultaneously with the lower housing 1612 is manufactured. The integrally formed structure enhances the strength of the connecting portions 1612b to avoid detachment, and also reduces the assembly process to lower the manufacturing cost. The connecting portions 1612b may also be removably attached to the lower housing 1612, and the connecting portions 1612b may be selected according to different the lower housings 1612 to enhance the adaptability. More as an embodiment, the connecting portions 1612b are provided at least 2 and are distributed substantially along the width direction. The lifting portions 1612c are located on both sides of the lower housing 1612 along the width direction of the electric all-terrain vehicle 100. The provision of the lifting portions 1612c facilitates the movement of the power battery 161 by lifting during the assembly of the power battery 161 in electric all-terrain vehicle 100. This reduces the difficulty of moving the power battery 161, and thus improves the working efficiency of installing the power battery 161. More as an embodiment, the lifting portions 1612c are provided with at least 4 lifting portions.

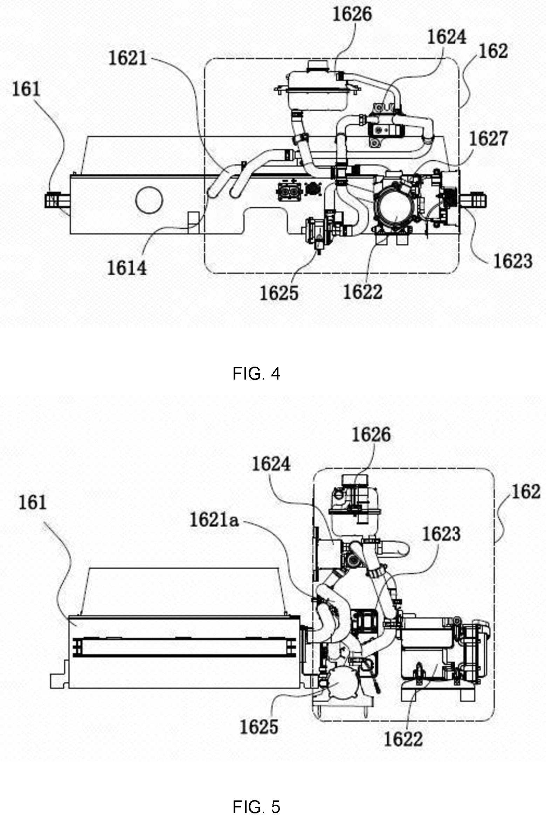

As shown in FIGS. 4 and 5, as an embodiment, the battery assembly 16 further includes a temperature control device 162. Viewed along the length of the electric all-terrain vehicle 100, the temperature control device 162 at least partially overlaps the power battery 161. The transmission system 13 includes the rear drive axle 133 at least partially located between the first rear wheel 1421 and the second rear wheel 1422. The power battery 161, the temperature control device 162, and the rear drive axle 133 are substantially distributed in the length direction of the electric all-terrain vehicle 100. The temperature control device 162 is at least partially located between the power battery 161 and the rear drive axle 133 and the temperature control device 162 is disposed adjacent to the power battery 161. The temperature control device 162 and power battery 161 are compactly arranged, which improves the compactness of the temperature control device 162 and the power battery 161 and saves space on the electric all-terrain vehicle 100. This arrangement also shortens the pipeline and wiring connected between the temperature control device 162 and the power battery 161, thereby enhancing the safety of the electric all-terrain vehicle 100 and reducing costs. The temperature control device 162 includes a circulating pipeline 1621 for regulating the temperature of power battery 161. And the coolant within the circulating pipeline 1621 is capable of circulating between the temperature control device 162 and the power battery 161. As an embodiment, the circulating pipeline 1621 includes an inner circulating pipeline (not shown) disposed in the power battery 161 and an external circulating pipeline 1621a disposed in the temperature control device 162. The inner circulating pipeline and the external circulating pipeline 1621a are connected through a connection port 1614 located at the rear side of the power battery 161. It should be noted that since the inner circulating pipeline and the external circulating pipeline 1621a are in fluid communication with each other, they will be referred to hereinafter as the circulation pipeline 1621, without making a specific distinction between the inner circulating pipeline and the external circulating pipeline 1621a.

The temperature control device 162 includes a cooling member 1622, a heating member 1623, a heat exchanger 1624, a water pump 1625, and a water reservoir 1626. The circulating pipeline 1621 flows at least partially through the heating member 1623 and heats the coolant within the circulating pipeline 1621 via the heating member 1623. As an embodiment, the circulating pipeline 1621 is further connected to the water pump 1625 for providing circulating water pressure and the water reservoir 1626 for balancing the coolant volume. The cooling member 1622 includes a refrigerant pipeline 1627 for refrigerant circulation, and both the circulating pipeline 1621 and the refrigerant pipeline 1627 flow through and are capable of exchanging heat in the heat exchanger 1624. The cooling and heating of the power battery 161 is realized through a closed loop of pipeline circuits, independent of other circuits. While ensuring that the power battery 161 works efficiently, a certain length of pipeline can be reduced as well as the complexity of the connections can be reduced to lower the overall cost of the electric all-terrain vehicle 100. The heat exchanger 1624 is located above the heating member 1623 and the cooling member 1622, thereby preventing the heat exchanger 1624 from being excessively close to the heating member 1623 or the cooling member 1622, which could otherwise cause interference between the heat exchanger 1624 and the heating member 1623 or the cooling member 1622. This arrangement helps improve the operational stability of the heat exchanger 1624, the heating member 1623, and the cooling member 1622. As an embodiment, the heating member 1623 is provided in front of the cooling member 1622. The forward arrangement of the heating member 1623 can shorten the length of the circulating pipeline 1621, and can also improve the operating efficiency of the temperature control device 162. Compared to the heating member 1623, the cooling member 1622 has a larger volume. At the same time, the cooling member 1622 is used to cool the coolant in the circulating pipeline 1621 via the heat exchanger 1624. The rearward position of the cooling member 1622 has a relatively small impact on the cooling efficiency. By arranging the heating member 1623 in front of the cooling member 1622, the length of the circulating pipeline 1621 can be reduced. Furthermore, the heating efficiency of the heating member 1623 can be enhanced while ensuring the cooling efficiency of the cooling member 1622. More as an embodiment, the cooling member 1622 may be provided as a compressor in this application and the heating member 1623 may be provided as a PTC heater in this application. The water pump 1625 is used to provide circulating water pressure. The water pump 1625 is disposed adjacent to the power battery 161, which facilitates improved pumping of the coolant and ensures circulation of the coolant in the pipeline. The water reservoir 1626 is connected to the heat exchanger 1624 and the water pump 1625 via a line, and the water reservoir 1626 is capable of replenishing the circulating pipeline 1621 with coolant. This arrangement reduces the length of the pipeline in the temperature control device 162 and reduces the cost of the pipeline. In one embodiment, the water reservoir 1626 at least partially overlaps with the water pump 1625, and the water reservoir 1626 is disposed above the water pump 1625. Such an arrangement allows the coolant to flow from the water reservoir 1626 to the circulating pipeline 1621 under the effect of gravity, thereby ensuring a balanced liquid level within the circulating pipeline 1621. This further enhances the circulation of the coolant within the temperature control device 162, improves the working efficiency of the temperature control device 162, and contributes to increase the overall energy utilization efficiency of the electric all-terrain vehicle 100.

A gap is defined between each component in the temperature control device 162 and the power battery 161, which can prevent elastic deformation of the mounting frame due to vibration under bumpy road conditions, and prevent interference between the temperature control device 162 and the power battery 161. This arrangement improves the durability of the temperature control device 162 and the power battery 161. As an embodiment, in the temperature control device 162, the heating member 1623 and the water pump 1625 are disposed in proximity to the power battery 161. The heating member 1623 and the water pump 1625 are formed with a gap between the power battery 161, so that the heating member 1623 and the water pump 1625 do not interfere with the power battery 161. At the same time, since the heating member 1623 and the water pump 1625 generate heat during operation, the gap can reduce the heat transferred from the heating member 1623 and the water pump 1625 to the power battery.

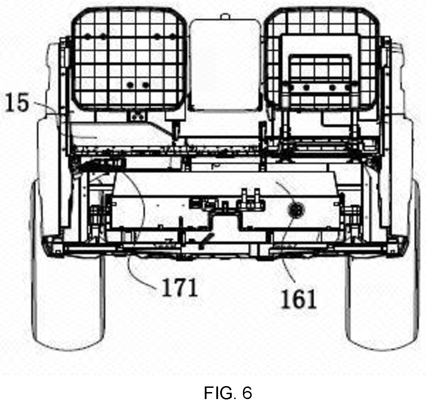

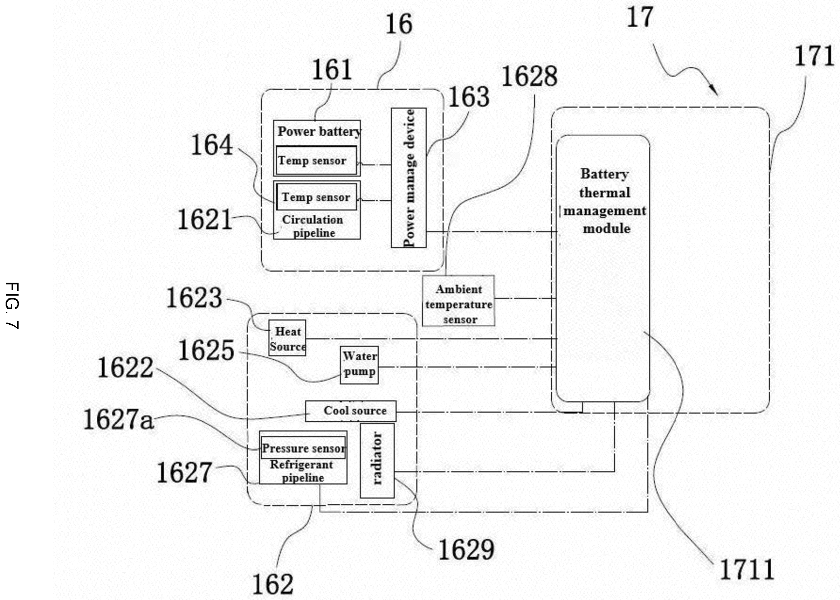

As shown in FIGS. 6 and 7, as an embodiment, the electric all-terrain vehicle 100 includes a control system 17, the control system 17 includes a vehicle controller 171. The vehicle controller 171 is used to control the operation of the electric all-terrain vehicle 100. As shown in FIG. 6, the vehicle controller 171 is provided between the power battery 161 and the seat assembly 15. When viewed along the height direction of the electric all-terrain vehicle 100, the vehicle controller 171 is arranged to substantially overlap with the power battery 161 and the seat assembly 15, respectively. As an embodiment, the projection of the vehicle controller 171 on the reference plane 101 along the height direction of the electric all-terrain vehicle 100 is substantially within the projection of the power battery 161 on the reference plane 101 along the height direction of the electric all-terrain vehicle 100. Similarly, the projection of the vehicle controller 171 on the reference plane 101 along the height direction is substantially within the projection of the seat on the reference plane 101 along the height direction of the electric all-terrain vehicle 100. The vehicle controller 171 has a relatively small size so that it can be positioned within a gap between the power battery 161 and the seat assembly 15. At the same time, disposing the vehicle controller 171 in this gap provides protection for the vehicle controller 171, so as to prevent damage to the vehicle controller 171 resulting from impacts during the operation of the electric all-terrain vehicle 100. The gap position can ensure that the vehicle controller 171 is far away from dust and sand raised during the operation of the electric all-terrain vehicle 100, improving the cleanliness of the vehicle controller 171. With the vehicle controller 171 disposed in the gap, it is possible to easily expose the vehicle controller 171 by opening the seat assembly 15, reducing the difficulty of installing, maintaining or replacing the vehicle controller 171. As an embodiment, the vehicle controller 171 may be fixed directly to the bottom of the seat assembly 15, or directly to the top of the power battery 161, or indirectly to the bottom of the seat assembly 15 or the top of the power battery 161 by means of a fixing member such as a mount.

As shown in FIG. 7, the vehicle controller 171 includes a vehicle control module (not shown) and a battery thermal management module 1711. The vehicle control module 171 is used to control the operation of the electric all-terrain vehicle 100. The battery thermal management module 1711 is used to regulate the operating temperature of the power battery 161, which improves the stability of the operating temperature of the power battery 161, and enable the power battery 161 to always operate at a suitable temperature. The battery assembly 16 includes a power management device 163 and a battery temperature sensor 164. The power management device 163 controls the overall operation of the power battery 161, in particular the charging and discharging of the power battery 161, so that the power battery 161 operates in a stable state to avoid malfunctions and dangers. The temperature of the power battery 161 is an important monitoring object during the operation of the power battery 161, and the temperature of the power battery 161 can better demonstrate the operation state of the power battery 161. The battery temperature sensor 164 is disposed in the power battery 161, and the overall temperature of the power battery 161 and the temperature of the battery module therein are obtained by the battery temperature sensor 164, which can better detect the operation state of the power battery 161. At the same time, the battery temperature sensor 164 may also be directly installed in the circulation pipeline 1621 of the power battery 161. The battery temperature sensor 164 is configured to directly detect and acquire the temperature of the coolant, thereby ensuring that the coolant can stably circulate within the circulation pipeline 1621, thereby enabling timely detection of potential operational issues of the power battery 161. The power management device 163 is connected to the battery temperature sensor 164 described above, and the power management device 163 is capable of obtaining the temperature of the battery module in the power battery 161 and the temperature of the coolant in the circulating pipeline 1621. The power management device 163 is at least partially connected to the battery thermal management module 1711, and the power management device 163 transmits temperature data of the battery module in the power battery 161 and the coolant in the circulating pipeline 1621 to the battery thermal management module 1711.

The temperature control device 162 further includes a pressure sensor 1627a disposed in the refrigerant pipeline 1627. The pressure sensor 1627a is connected to the battery thermal management module 1711 and transmits refrigerant pressure in the refrigerant pipeline 1627 to the battery thermal management module 1711. The pressure in the refrigerant pipeline 1627 has an important relationship to the temperature and operating condition of the refrigerant in the refrigerant pipeline 1627. Detecting the pressure in the refrigerant pipeline 1627 can more accurately obtain the overall temperature and operating state of the refrigerant in the refrigerant pipeline 1627, which can provide the battery thermal management module 1711 with more basis for controlling the cooling member, and can improve the control accuracy of the battery thermal management module 1711 on the cooling member 1622. The temperature control device 162 further includes an ambient temperature sensor 1628 for detecting the ambient temperature. The ambient temperature sensor 1628 obtains the air temperature of the environment in which the electric all-terrain vehicle 100 is located in real time. The ambient temperature sensor 1628 is connected to the battery thermal management module 1711 and transmits the ambient air temperature to the battery thermal management module 1711. The battery thermal management module 1711 is capable of carrying out thermal management of the power battery 161 according to the acquired battery module temperature, coolant temperature, and ambient temperature. The battery module temperature, coolant temperature, and ambient temperature are capable of detecting the operation status of the power battery 161 from various aspects. Based on the detected temperature parameters, the temperature control device 162 can be controlled accordingly to enhance the operational stability of the power battery 161. In addition, the ambient temperature can corroborate with the battery module temperature and the coolant temperature, improving the accuracy of the power battery 161 operating state obtained by the battery thermal management module 1711. When the battery temperature sensor 164 detects that the temperature of the power battery 161 is too high, the battery thermal management module 1711 controls the cooling member 1622 and the water pump 1625 in the temperature control device 162 to begin to work to reduce the temperature of the coolant in the circulating pipeline 1621, and thereby reduce the temperature of the power battery 161, so as to enable the power battery 161 to operate in a suitable temperature range. When the battery temperature sensor 164 detects that the temperature of the power battery 161 is too low, the battery thermal management module 1711 controls the heating member 1623 and the water pump 1625 in the temperature control device 162 to begin to work to heat the coolant in the circulating pipeline 1621, thereby increasing the temperature of the power battery 161, so that the power battery 161 can operate in a suitable temperature range. The battery thermal management module 1711 is further capable of thermally managing and controlling the temperature control device 162 in accordance with the acquired refrigerant pressure and ambient temperature. This allows the thermal management requirements of the power battery 161 to be met while enhancing the operational stability of the temperature control device 162, and also improves the operational stability of the power battery 161.

The temperature control device 162 also includes a radiator 1629 connected to the refrigerant pipeline 1627. The radiator 1629 is used to dissipate heat for the coolant. The radiator 1629 is able to ensure the normal operation of the cooling member 1622, as well as to enhance the cooling efficiency of the cooling member 1622. The battery thermal management module 1711 is also electrically connected to the heating member 1623, the cooling member 1622, the water pump 1625, and the radiator 1629, respectively. The battery thermal management module 1711 is capable of independently controlling the operation of the heating member 1623, the cooling member 1622, the water pump 1625, the radiator 1629. The signaling between the battery thermal management module 1711 and the heating member 1623, the cooling member 1622, and the water pump 1625 in the temperature control device 162 can be realized through a CAN (Controller Area Network) communication connection, a LIN (Local Interconnect Network) communication connection, or a hardwire communication connection. The CAN communication connection has the advantages of accurate and fast transmission of signals and data, and at the same time, the use of CAN communication to connect to achieve faster and more accurate signal transmission. The LIN communication connection also has a relatively high signal and data transfer speed and, the information transfer bandwidth is able to meet the control of the battery thermal management module 1711 and the components described above. The hardwired communication connection offers the advantage of simplicity and convenience, and can reduce costs while meeting the requirements of signal transmission. Similarly, for the signaling between the battery thermal management module 1711 and different devices can be realized by selecting a plurality of the above signaling methods in conjunction with each other as needed. For example, the battery thermal management module 1711 can wake up the heating member 1623 and the cooling member 1622 via hardwired signals. At the same time, the battery thermal management module 1711 can transmit control signals and receive feedback from the heating element 1623 and the cooling element 1622 via the CAN signal. The battery thermal management module 1711 may perform information transfer work such as control signaling and information feedback between the LIN signal and the water pump 1625. The battery thermal management module 1711 can directly control the radiator 1629 in the refrigerant pipeline 1627 via the hardwired signals. A suitable and efficient signaling method can be selected between the battery thermal management module 1711 and different devices based on the differences in the types of devices and the differences in the signals transmitted.

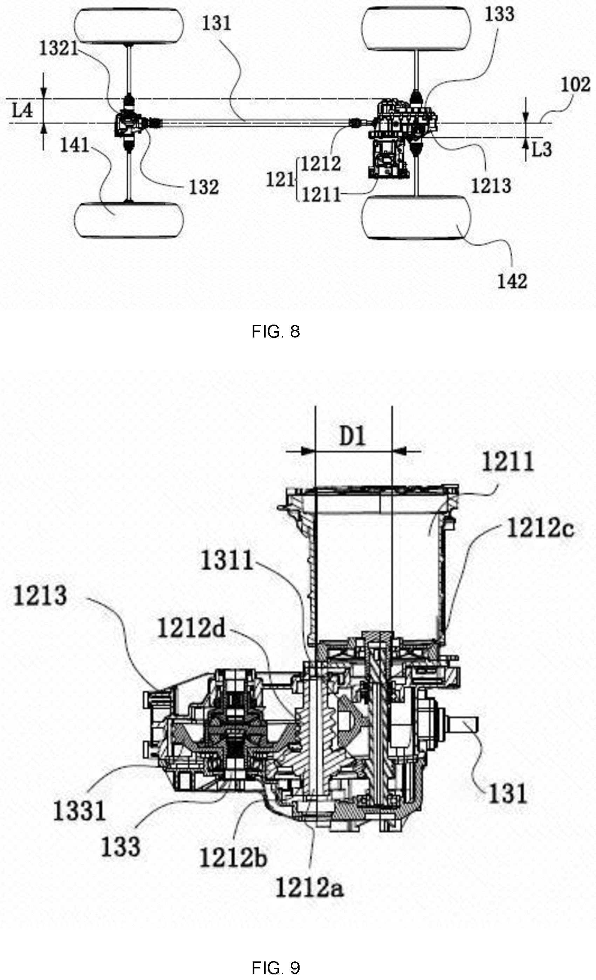

As shown in FIG. 8, the powertrain 12 includes a drive assembly 121 for generating a driving force. The drive assembly 121 is connected to the rear drive axle 133 in a transmission mode to transmit the driving force generated by the drive assembly 121 to the rear drive axle 133, thereby driving the rear wheels 142 to move. The transmission system 13 further includes the propeller shaft 131 disposed between the front drive axle 132 and the drive assembly 121. One end of the propeller shaft 131 is connected to the front drive axle 132 in a transmission mode, and the other end of the propeller shaft 131 is fixedly connected to the drive assembly 121, delivering the driving force from the drive assembly 121 to the front drive axle 132 to drive the front wheels 141. A longitudinal plane 102 is defined as being perpendicular to the width direction of the electric all-terrain vehicle 100 and the center of the width of the electric all-terrain vehicle 100 is located on the longitudinal plane. The propeller shaft 131 is at least partially positioned on the longitudinal plane 102. As an embodiment, the drive assembly 121 includes a drive motor 1211 and a reducer 1212. In this application, the propeller shaft 131 and the rear drive axle 133 are respectively connected to the reducer 1212 in transmission mode.

As shown in FIG. 9, the reducer 1212 includes a power transmission shaft 1212a, a bevel gear 1212b is provided on the power transmission shaft 1212a. A ring gear 1311 is provided at one end of the propeller shaft 131 connected to the reducer 1212, which is meshed with the bevel gear 1212b. The transmission of driving force can be realized between the propeller shaft 131 and the reducer 1212 through the meshing of these gears. The reducer 1212 further includes a power input shaft 1212c, the power input shaft 1212c is arranged substantially in parallel with the power transmission shaft 1212a, and the power input shaft 1212c is connected to the power transmission shaft 1212a in a transmission mode. As an embodiment, the power input shaft 1212c is connected to the drive motor 1211 in a transmission mode, thereby transmitting the driving force of the drive motor 1211 to the reducer 1212. Accordingly, the front drive axle 132 also includes a front bevel gear 1321 (shown in FIG. 8) engaged with the propeller shaft 131 to form a transmission connection. In this application, the front bevel teeth 1321 of the front drive axle 132 are at least partially located on the right side of the longitudinal plane 102. The power transmission shaft 1212a is also provided with a power output gear 1212d, and the rear drive axle 133 is provided with a rear bevel gear 1331 engaged with the power output gear 1212d. The transmission of the driving force between the rear drive axle 133 and the reducer 1212 is realized through the power output gear 1212d and the rear bevel gear 1331, such that the reducer 1212 further transmits the driving force to the rear drive axle 133 via the power transmission shaft 1212a. In this application, the rear bevel gear 1331 of the rear drive axle 133 is at least partially located on the right side of the longitudinal plane 102. In order to maintain the same direction of rotation of the front bevel gear 1321 of the front drive axle 132 and the rear bevel gear 1331 of the rear drive axle 133, the bevel gear 1212b on the power transmission shaft 1212a needs to be on the right side of the longitudinal plane 102 to output power to the propeller shaft 131. It should be noted that the bevel gear 1212b on the power transmission shaft 1212a is at least partially located on the right side of the propeller shaft 131. As an embodiment, since the bevel gear 1212b on the power transmission shaft 1212a is at least partially located on the right side of the reducer 1212, the reducer 1212 needs to occupy a larger space on the right side of the longitudinal plane 102. In order to avoid interference with the reducer 1212 and components such as the rear wheels 142, the drive motor 1211 is located on the left side of the longitudinal plane 102. This approach not only avoids interference between the drive assembly 121 and the rear wheel 142 on the left side of the electric all-terrain vehicle 100 under extreme operating conditions, but also adequately balances the position of the center of gravity of the entire vehicle.

As shown in FIG. 9, the distance D1 between the axis of the power input shaft 1212c and the axis of the power transmission shaft 1212a is greater than or equal to 74 mm and less than or equal to 138 mm. As an embodiment, the distance D1 between the axis of the power input shaft 1212c and the axis of the power transmission shaft 1212a is greater than or equal to 84 mm and less than or equal to 128 mm. As an embodiment, the distance D1 between the axis of the power input shaft 1212c and the axis of the power transmission shaft 1212a is greater than or equal to 95 mm and less than or equal to 116 mm. The arrangement of the above distance can prevent the distance between the power input shaft 1212c and the power transmission shaft 1212a from being too large, which could adversely affect the transmission of power through the power input shaft 1212c and the power transmission shaft 1212a, thereby reducing the potential power loss in the transmission process and improving the transmission efficiency of the transmission system 13. In addition, the arrangement can also prevent the distance between the power input shaft 1212c and the power transmission shaft 1212a from being too small, which could cause wear between the power input shaft 1212c and the power transmission shaft 1212a, thereby enhancing the overall service life of the reducer 1212.

As an embodiment, in this application, the rear bevel gear 1331 on the rear drive axle 133 is always engaged with the power output gear 1212d on the power transmission shaft 1212a, and the power transmission is always maintained between the reducer 1212 and the rear drive axle 133. The ring gear 1311 of the transmission shaft and the bevel gear 1212b have a first state of mutual engagement and a second state of mutual separation. When the ring gear 1311 of the propeller shaft 131 and the bevel gear 1212b are in the first state, the driving force is transmitted between the propeller shaft 131 and the reducer 1212. In this case, both the front drive axle 132 and the rear drive axle 133 can drive the electric all-terrain vehicle 100 to operate, and the electric all-terrain vehicle 100 is in a four-wheel drive mode. When the ring gear 1311 of the propeller shaft 131 and the bevel gear 1212b are in the second state, no driving force is transmitted between the propeller shaft 131 and the reducer 1212. In this case, only the rear drive axle 133 drives the electric all-terrain vehicle 100 to operate, and the electric all-terrain vehicle 100 is in a rear-wheel drive mode. This arrangement provides the user with multiple operation modes to accommodate various road conditions. In poor road conditions, the four-wheel drive mode enhances the traversing capability of the electric all-terrain vehicle 100. In better road conditions, the rear-wheel drive mode reduces power consumption, thereby increasing the electric all-terrain vehicle 100's driving range.

As shown in FIG. 8 and FIG. 9, as an embodiment, the reducer 1212 and the rear drive axle 133 at least partially pass across the longitudinal plane 102. The drive motor 1211 is disposed on one side of the longitudinal plane 102 and does not interfere with the longitudinal plane 102. In the width direction of the electric all-terrain vehicle 100, the distance L3 between the leftmost end of the reducer 1212 and the longitudinal plane 102 is less than the distance L4 between the rightmost end of the reducer 1212 and the longitudinal plane 102. This arrangement ensures that the center of gravity of the reducer 1212 is offset from the longitudinal plane 102. As an embodiment, the center of gravity of the reducer 1212 is located on the right side of the longitudinal plane 102. The ratio of a distance L3 between the leftmost end of the reducer 1212 and the longitudinal plane 102 to a distance L4 between the rightmost end of the reducer 1212 and the longitudinal plane 102 is greater than or equal to 0.51 and less than or equal to 0.95. As an embodiment, the ratio of a distance L3 between the leftmost end of the reducer 1212 and the longitudinal plane 102 to a distance L4 between the rightmost end of the reducer 1212 and the longitudinal plane 102 is greater than or equal to 0.58 and less than or equal to 0.88. As an embodiment, the ratio of a distance L3 between the leftmost end of the reducer 1212 and the longitudinal plane 102 to a distance L4 between the rightmost end of the reducer 1212 and the longitudinal plane 102 is greater than or equal to 0.66 and less than or equal to 0.8. This arrangement of dimensions prevents an excessive difference between the distance of the reducer 1212 in the left portion of the longitudinal plane 102 and the distance of the reducer 1212 in the right portion of the longitudinal plane 102, and improves the stability of the reducer 1212 in the electric all-terrain vehicle 100. When the ratio of the distance L3 between the leftmost end of the reducer 1212 and the longitudinal plane 102 to the distance L4 between the rightmost end of the reducer 1212 and the longitudinal plane 102 is too large, the distance between the drive motor 1211 and the propeller shaft 131 increases, and the problem of power loss may occur. Similarly, the ratio of the distance L3 between the leftmost end of the reducer 1212 and the longitudinal plane 102 to the distance L4 between the rightmost end of the reducer 1212 and the longitudinal plane 102 is too small to favor the arrangement of the reducer 1212 on the right side of the longitudinal plane 102. In the drive assembly 121, the drive motor 1211 and the speed reducer 1212 are integrally formed, with the left end face of the speed reducer 1212 connected to the right end face of the drive motor 1211. Thus, the distance L3 between the leftmost end of the speed reducer 1212 and the longitudinal plane 102 corresponds to the minimum distance between the drive motor 1211 and the longitudinal plane 102. As an embodiment, the minimum distance L3 between the drive motor 1211 and the longitudinal plane 102 is greater than or equal to 70 mm and less than or equal to 140 mm. As an embodiment, the minimum distance L3 between the drive motor 1211 and the longitudinal plane 102 is greater than or equal to 85 mm and less than or equal to 125 mm. As an embodiment, the minimum distance L3 between the drive motor 1211 and the longitudinal plane 102 is greater than or equal to 95 mm and less than or equal to 115 mm. The minimum distance L3 between the drive motor 1211 and the longitudinal plane 102 falls within the above range, which can reserve sufficient space for the arrangement of the reducer 1212. This ensures that the center of gravity of the drive assembly 121, which consists of the drive motor 1211 and the reducer 1212, is positioned closer to the longitudinal plane 102, thereby ensuring the stability of the drive assembly 121 in the electric all-terrain vehicle 100. At the same time, the compactness of the drive assembly 121 can also be improved, thereby reducing the space occupied by the drive assembly 121.

As shown in FIG. 8 and FIG. 9, the drive motor 1211 and the reducer 1212 of drive assembly 121 are integrated with the rear drive axle 133. Specifically, the drive motor 1211, the reducer 1212, and the rear drive axle 133 are housed within the installation housing 1213. The one-piece molding arrangement strengthens the overall strength of the drive assembly 121 and the rear drive axle 133, and strengthens the stability of the connection between the frame 11 and the drive assembly 121, and the frame 11 and the rear drive axle 133. The drive assembly 121 and the rear drive axle 133 may be assembled as a whole, which reduces the process complexity of the assembly, and can reduce the assembly difficulty and cost. This arrangement simultaneously reduces the footprint of the drive assembly 121 and the rear drive axle 133, improves the structural compactness and spatial efficiency of the electric all-terrain vehicle 100, and thereby contributes to the lightweight design of the electric all-terrain vehicle 100. The drive assembly 121 and the rear drive axle 133 may also be manufactured separately and subsequently assembled together. Different drive assemblies 121 and rear drive axles 133 may be selectively combined to accommodate various vehicle models, thereby enhancing the interchangeability of the drive assembly 121 and the rear drive axle 133, and reducing manufacturing costs.

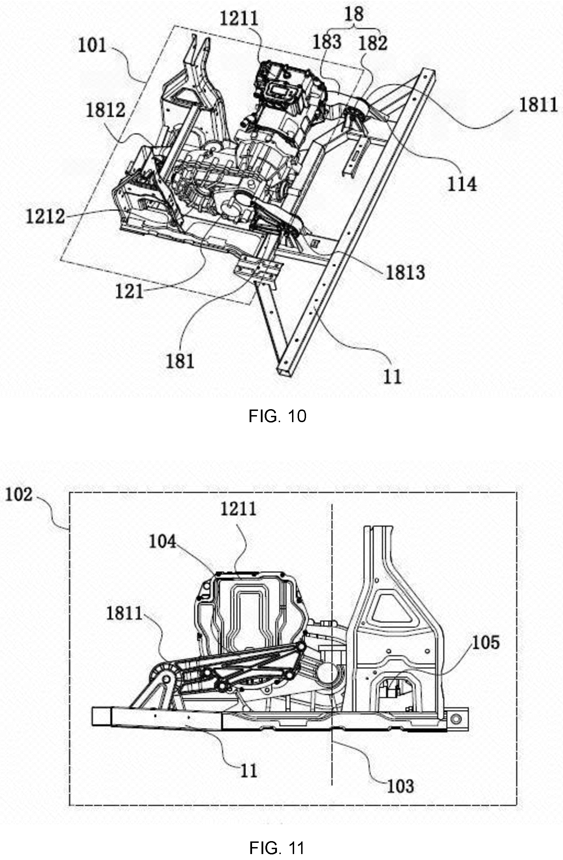

As shown in FIG. 10, the electric all-terrain vehicle 100 includes a support cradle 18. The support cradle 18 can be used to support the drive assembly 121 and attenuate the vibration transmission between the drive assembly 121 and the frame 11. The support cradle 18 can restrict movement of the drive assembly 121, which is conducive to improving the stability between the drive assembly 121 and the frame 11. The support cradle 18 includes three hanging members 181, and the drive assembly 121 is fixedly connected to the frame 11 through three hanging members 181. As an embodiment, the support cradle 18 includes a bushing 182 for providing cushioning and a bracket 183 for connecting the drive assembly 121. The bracket 183 is connected to the frame 11 through the bushing 182, and the bushing 182 is at least partially disposed between the frame 11 and the bracket 183. The bushing 182 is configured to reduce the vibration transmission between the drive assembly 121 and the frame 11 and to support the drive assembly 121. The frame 11 further includes a pair of connecting brackets 114, with the support cradle 18 positioned between the two connecting brackets 114. The support cradle 18 is fixedly connected to the connecting brackets 114 by fasteners, and the interplay of the connecting bracket 114 and the support cradle 18 enhances the connection strength between the support cradle 18 and the frame 11. Therefore, during startup or operation of the powertrain 12, the support cradle 18 is able to reduce the vibration transmission between the drive assembly 121 and the frame 11, thereby improving comfort of the electric all-terrain vehicle 100. In addition, the number of hanging members 181 may be increased according to different usage scenarios and practical conditions to reduce the vibration transmission between the drive assembly 121 and the frame 11, thereby improving the comfort of the electric all-terrain vehicle 100.

In this embodiment, the hanging members 181 in the present application are defined as a first hanging member 1811, a second hanging member 1812, and a third hanging member 1813, according to their positions. As an embodiment, the first hanging member 1811 and the third hanging member 1813 are substantially disposed along the width direction. The second hanging member 1812 is located behind the first hanging member 1811 and the third hanging member 1813. The first hanging member 1811 is disposed on the left side of the longitudinal plane 102, at least a portion of the second hanging member 1812 is disposed on the longitudinal plane 102, and the third hanging member 1813 is disposed on the right side of the longitudinal plane 102. Defining a reference plane 101 perpendicular to the height direction of the electric all-terrain vehicle 100, the second hanging member 1812 is at least partially disposed on the reference plane 101, and the first hanging member 1811 and the third hanging member 1813 are both disposed on a lower side of the reference plane 101. The first hanging member 1811, the second hanging member 1812, and the third hanging member 1813 are substantially triangularly distributed. With the above arrangement, the triangular distribution improves the connection stability and connection strength of the drive assembly 121 and the hanging members 181, thereby preventing the hanging members 181 from being damaged due to insufficient strength under extreme operating conditions, and thus improving the service life of the hanging members 181.

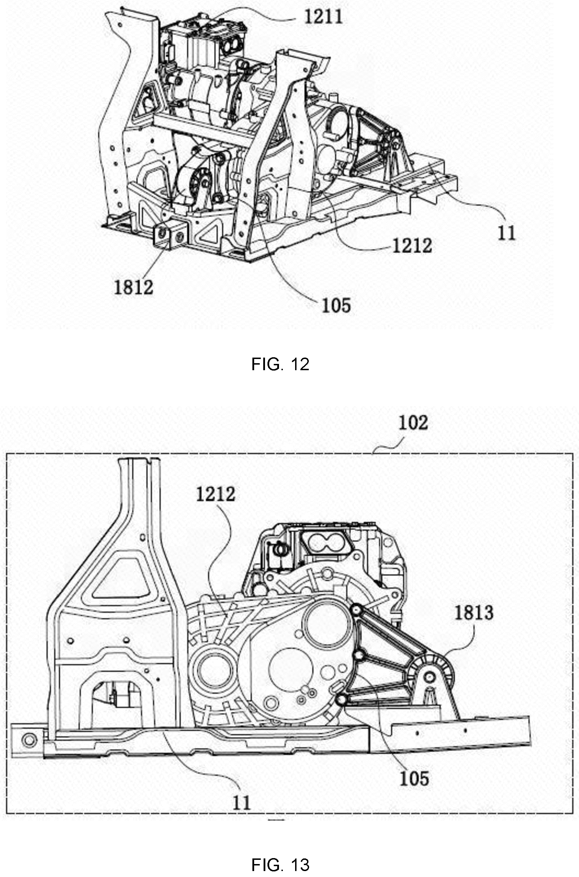

As shown in FIG. FIG. 11, FIG. 12, and FIG. 13, as an embodiment, the first hanging member 1811 is disposed on a side of the drive motor 1211 away from the reducer 1212. The first hanging member 1811 and the drive motor 1211 are fixedly coupled by fasteners, defining a contact surface of the first hanging member 1811 with the drive motor 1211 as a first contact surface 104, with the first contact surface 104 is substantially parallel to the longitudinal plane 102. The second hanging member 1812 and the reducer 1212 are fixedly connected by fasteners, the second hanging member 1812 is disposed on a rear side of the reducer 1212, the contact surface of the second hanging member 1812 with the reducer 1212 is defined as the second contact surface 105. The plane perpendicular to the length direction of the electric all-terrain vehicle 100 is defined as the horizontal plane 103, and the second contact surface 105 is substantially parallel to the horizontal plane 103. The third hanging member 1813 is fixedly connected to the reducer 1212 by fasteners. The third hanging member 1813 is connected to a side of the reducer 1212 away from the drive motor 1211, and a contact surface of the third hanging member 1813 and the reducer 1212 substantially conforms to an outer contour of the reducer 1212. In this way, the first contact surface 104 and the second contact surface 105 are perpendicular to each other, thereby effectively limiting the displacement of the drive motor 1211 and the reducer 1212 in the length direction and the width direction. This arrangement improves the stability of the connection between the first hanging member 1811 and the drive motor 1211 as well as the stability of the connection between the second hanging member 1812 and the reducer 1212. In addition, the contact surface between the third hanging member 1813 and the reducer 1212 conforms to the outer contour of the reducer 1212, which reduces the volume of the third hanging member 1813 while satisfying the connection strength requirements between the third hanging member 1813 and the reducer 1212, thus enhancing the connection stability between the third hanging member 1813 and the reducer 1212. It is to be noted that the above-described drive motor 1211 and reducer 1212 are only used to denote positions of the first hanging member 1811, the second hanging member 1812 and the third hanging member 1813. The first hanging member 1811, the second hanging member 1812 and the third hanging member 1813 are not directly connected to the drive motor 1211 and the reducer 1212, and the first hanging member 1811, second hanging member 1812 and third hanging member 1813 are all connected to installation housing 1213.

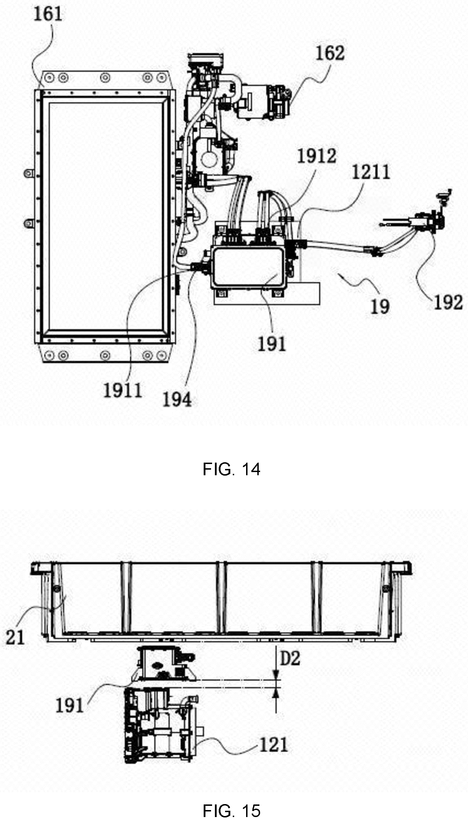

As shown in FIG. 14, the electric all-terrain vehicle 100 includes a charging and distributing integration system 19 at least partially electrically coupled to the powertrain 12. The charging and distributing integration system 19 is disposed at least partially on a rear side of the power battery 161. The charging and distributing integration system 19 is used to control inputs and outputs of electrical energy in the power battery 161. The charging and distributing integrated system 19 includes a charging and distributing device 191. The charging and distributing device 191 is at least partially located above the powertrain 12. Optionally, the charging and distributing device 191 is located above the drive motor 1211, and the charging and distributing device 191 is further located on a rear side of the power battery 161. As an embodiment, the charging and distributing device 191 is provided substantially on the left side of the longitudinal plane. A charging unit, a conversion unit and a power distributing unit are integrally provided in the charging and distributing device 191. The charging unit is capable of converting the alternating current power input from an external power source into direct current power for charging the power battery. The conversion unit is configured to step down the electrical energy output by the power battery 161 for use by low-voltage electrical devices in the electric all-terrain vehicle 100. The power distributing unit is configured to control the power battery 161 to supply electrical energy to the high-voltage electrical components such as the drive motor 1211 in the electric all-terrain vehicle 100. The charging unit, conversion unit and power distributing unit are integrated as a single unit.

The charging and distributing device 191 includes a battery port 1911 connected to the battery assembly 16 and a motor port 1912 connected to the drive motor 1211. As an embodiment, the battery port 1911 is located at the front end of the charging and distributing device 191 and the motor port 1912 is located at the lower end of the charging and distributing device 191. Therefore, the battery port 1911 is positioned close to the power battery 161, and the motor port 1912 is positioned close to the drive motor 1211. This facilitates wiring layout of the charging and distributing device 191, reduces the wiring length between the battery port 1911 and the power battery 161, as well as reduces the wiring length between the motor port 1912 and the drive motor 1211, thereby reducing the cost of the charging and distributing device 191.The charging and distributing integrated system 19 provides electrical energy to the temperature control device 162 through the power distributing unit, so that the coolant can circulate in the pipeline of the battery assembly 16. This prevents the temperature of the power battery 161 from being too high or too low and ensures normal operation of the electric all-terrain vehicle 100. As an optional embodiment, in order to avoid interference with the charging and distributing device 191 and the drive motor 1211, the temperature control device 162 is at least partially located on the right side of the longitudinal plane 102.

The charging and distributing integrated system 19 further includes a charging port 192 electrically connected to the charging unit. When the electric all-terrain vehicle 100 is in a charging state, the charging port 192 is connected to an external power source via an external charging cable. The charging port 192 is further connected to the power battery 161 through the charging unit to charge the power battery 161. The charging and distributing system 19 further includes a cooling pipeline 194. The cooling pipeline 194 is at least partially disposed within the charging and distributing device 191, and the cooling pipeline 194 is connected to the radiator 1629, so that the coolant in the cooling pipeline 194 can transfer the heat generated during operation of the charging and distributing device 191 to the radiator 1629. This reduces the temperature of the charging and distributing device 191, thereby improving operational stability and extending the lifespan of the charging and distributing device 191. It should be noted that the radiator 1629 connected to the power charging and distributing device 191 and the radiator 1629 connected to the refrigerant pipeline 1627 may be the same component, so as to reduce part count in the electric all-terrain vehicle 100. Alternatively, the radiator 1629 connected to the power charging and distributing device 191 and the radiator 1629 connected to the refrigerant pipeline 1627 may be two separate components, so as to prevent interference between the temperature control device 162 and the power charging and distributing device 191, and to facilitate the arrangement of the lines of the temperature control device 162 and the power charging and distributing device 191.

As shown in FIG. 15, as an embodiment, the electric all-terrain vehicle 100 further includes a cargo box assembly 21 for holding items. The cargo box assembly 21 is attached to the rear of the frame 11. In a height-direction view of the electric all-terrain vehicle 100, the power charging and distributing device 191, the drive motor 1211, and the cargo box assembly 21 at least partially overlap, with the power charging and distributing device 191 disposed between the drive motor 1211 and the cargo box assembly 21. This arrangement may further improve the space utilization of the electric all-terrain vehicle 100 and contribute to improving the compactness of the electric all-terrain vehicle 100. When the electric all-terrain vehicle 100 is traveling in poor road conditions, road surface excitation induces heightened vibration of the charging and distributing device 191 along the electric all-terrain vehicle 100's height direction. The drive motor 1211 and the cargo box assembly 21 can further support the charging and distributing device 191, preventing the charging and distributing device 191 from shifting during the movement of the electric all-terrain vehicle 100 and avoiding operational compromise of the charging and distributing device 191, thereby enhancing both connection stability and operational stability of the power charging and distributing device 191. The minimum distance D2 between the charging and distributing device 191 and the driving motor 1211 is greater than or equal to 2 cm and less than or equal to 4 cm. In the case where the charging and distributing device 191 generates significant vibration, the above-described minimum distance D2 can provide a buffer region between the charging and distributing device 191 and the drive motor 1211. As an embodiment, the minimum distance D2 between the charging and distributing device 191 and the drive motor 1211 is greater than or equal to 2.4 cm and less than or equal to 3.6 cm. As an embodiment, the minimum distance D2 between the charging and distributing device 191 and the drive motor 1211 is greater than or equal to 2.7 cm and less than or equal to 3.3 cm. This arrangement can avoid the drive motor 1211 from bumping against the charging and distributing device 191 during operation, which avoids damage to the charging and distributing device 191, and thereby increasing the service life of the charging and distributing device 191. At the same time, it is also possible to avoid that the distance between the charging and distributing device 191 and the driving motor 1211 is too large resulting in power transmission loss, and to improve the power transmission efficiency.

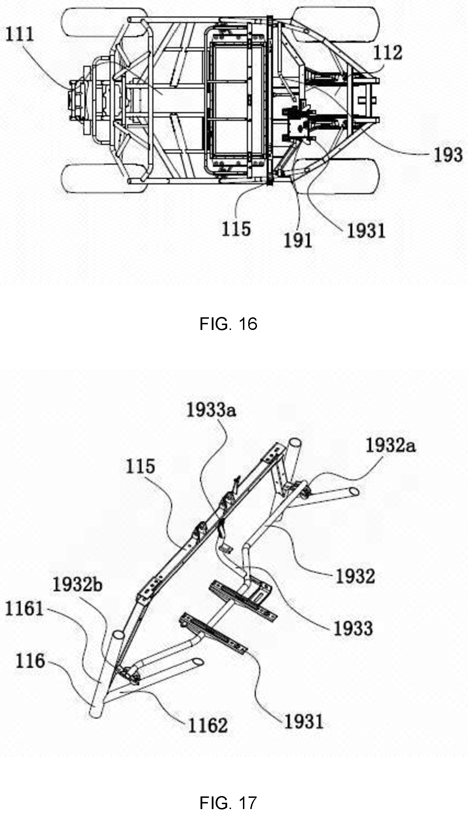

As shown in FIG. 16 and FIG. 17, the frame 11 further includes a rear barrier structure 115. The rear barrier structure 115 is disposed between the passenger cabin 111 and the rear cabin 112 and for separating the passenger cabin 111 and the rear cabin 112. The charging and distributing integrated system 19 further includes a charging and distributing bracket 193. The charging and distributing bracket 193 is at least partially positioned above the drive assembly 121. When viewed along the height direction of the electric all-terrain vehicle 100, at least a portion of the charging and distributing bracket 193 overlaps with at least a portion of the drive assembly 121. The charging and distributing bracket 193 includes a fixing seat 1931 for carrying the charging and distributing device 191. The charging and distributing bracket 193 is attached to the rear barrier structure 115.

The charging and distributing bracket 193 includes a first bracket 1932 extending in a width direction. The first bracket 1932 extends in a manner substantially the same as that of the rear barrier structure 115, and the first bracket 1932 is at least partially positioned rearward of the rear barrier structure 115. The first bracket 1932 includes a first fixing portion 1932a and a second fixing portion 1932b disposed at opposite ends thereof, the first bracket 1932 is fixedly connected to the frame 11 via the first fixing portion 1932a and the second fixing portion 1932b, respectively. As an embodiment, the frame 11 further includes a pair of longitudinal beams 116 disposed on opposing sides of the rear barrier structure 115 and extends substantially in the height direction of the electric all-terrain vehicle 100. The first fixing portion 1932a is fixedly connected to the longitudinal beam 116 on one side, and the second fixing portion 1932b is fixedly connected to the longitudinal beam 116 on the other side. As an embodiment, the charging and distributing bracket 193 further includes a second bracket 1933 extending substantially in the height direction of the electric all-terrain vehicle 100. One end of the second bracket 1933 is fixedly connected to the first bracket 1932, and the other end of the second bracket 1933 is fixedly connected to the rear barrier structure 115 via a third fixing portion 1933a. Optionally, a connection point between the second bracket 1933 and the first bracket 1932 is positioned substantially centrally along the first bracket 1932, which enhances connection stability between the first bracket 1932 and the second bracket 1933. As an embodiment, the second bracket 1933 is curved, with at least a portion of the second bracket 1933 extending substantially in the height direction of the electric all-terrain vehicle 100, and at least a portion of the second bracket 1933 extending substantially in the length direction of the electric all-terrain vehicle 100. In this way, interference between the second bracket 1933 and the charging and distribution device 191 is prevented, thereby providing more installation space for the charging and distribution device 191. The fixing seat 1931 is disposed on the first bracket 1932 and fixedly connected to the first bracket 1932, and the fixing seat 1931 is formed as a sheet metal member, which provides sufficient mounting space and mounting points for the charging and distributing device 191. Optionally, the fixing seat 1931 is located on one side of the second bracket 1933, and as an embodiment, the fixing seat 1931 is located on the left side of the second bracket 1933.

More as an embodiment, the longitudinal beam 116 includes a first longitudinal beam portion 1161 and a second longitudinal beam portion 1162 connected in a V-shape. One end of the first fixing portion 1932a is connected to the first longitudinal beam portion 1161 of one side of the longitudinal beam 116, and the other end of the first fixing portion 1932a is connected to the second longitudinal beam portion 1162. One end of the second fixing portion 1932b is connected to the first longitudinal beam portion 1161 of the longitudinal beam 116 on the other side, and the other end of the second fixing portion 1932b is connected to the second longitudinal beam portion 1162. The first fixing portion 1932a and the first longitudinal beam portion 1161 together with the second longitudinal beam portion 1162 form a stable triangular structure. The second fixing portion 1932b and the first longitudinal beam portion 1161 together with the second longitudinal beam portion 1162 also form a stable triangular structure. This arrangement can increase the contact area and points between the charging and distributing bracket 193 and the rear barrier structure 115, thereby avoiding the charging and distributing bracket 193 from detaching from the rear barrier structure 115. As a result, the connection strength between the charging and distributing bracket 193 and the rear barrier structure 115 is further improved, as well as the stability of the charging and distributing device 191 on the charging and distributing bracket 193 is enhanced.

As shown in FIG. 16, the power battery 161 is provided in front of the power charging and distributing device 191, and a gap is defined between the power charging and distributing device 191 and the power battery 161 in the length direction of the electric all-terrain vehicle 100. In this way, interference between the charging and distributing device 191 and the power battery 161(which may occur when the charging and distributing device 191 and the power battery 161 are arranged in close contact) can be avoided, thereby contributing to the improvement of the operational stability of the charging and power distribution device 191 and the power battery 161. In addition, it also makes a relatively compact layout between the charging and distributing device 191 and the power battery 161, thereby saving space on the electric all-terrain vehicle 100. At the same time, the wiring length between the charging and distributing device 191 and the power battery 161 is reduced, which increases the safety of the electric all-terrain vehicle 100 and also reduces costs.

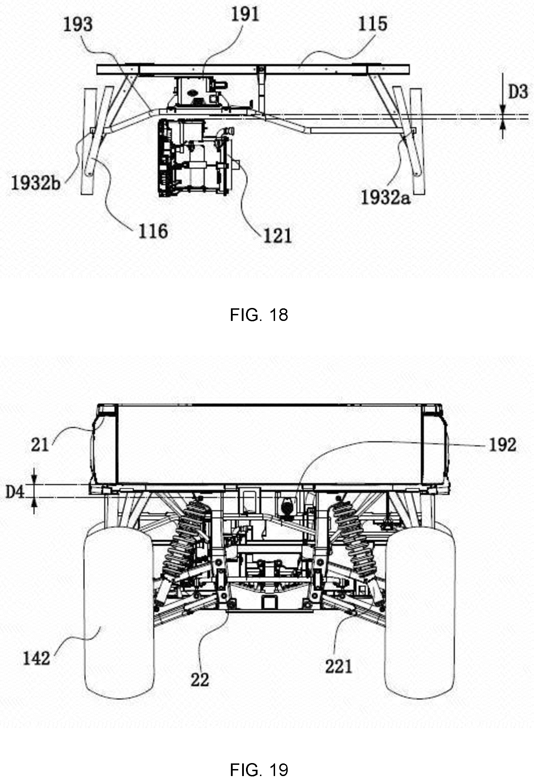

As shown in FIG. 18, as an embodiment, the charging and distributing bracket 193 is at least partially located above the drive motor 1211. When viewed along the height direction of the electric all-terrain vehicle 100, the charging and distributing bracket 193 at least partially overlaps the drive motor 1211. The drive motor 1211 may further support the charging and distributing device 191 and the charging and distributing bracket 193, thereby improving the connection stability and operational stability of the charging and distributing device 191. It also improves the space utilization of the electric all-terrain vehicle 100 and contributes to the compactness of the electric all-terrain vehicle 100. The distance D3 between the charging and distributing bracket 193 and the drive motor 1211 is greater than or equal to 2 cm and less than or equal to 3.5 cm. As an embodiment, the distance D3 between the charging and distributing bracket 193 and the drive motor 1211 is greater than or equal to 2.3 cm and less than or equal to 3.4 cm. As an embodiment, the distance D3 between the charging and distributing bracket 193 and the drive motor 1211 is greater than or equal to 2.6 cm and less than or equal to 3.1 cm. In the height direction of the electric all-terrain vehicle 100, a gap is defined between the charging and distributing device 191 and the drive motor 1211, and a gap is defined between the charging and distributing bracket 193 and the drive motor 1211. When the electric all-terrain vehicle 100 is driven in harsh road conditions, the electric all-terrain vehicle 100 vibrates more in the height direction. The above-described gap can prevent interference between the charging and distributing device 191 and the drive motor 1211, thereby improving the stability of the charging and distributing device 191 and the drive motor 1211, and in turn enhancing the connection stability of the charging and distributing bracket 193.

As shown in FIG. 19, as an embodiment, the electric all-terrain vehicle 100 includes a suspension assembly 22 for connecting the travel members 14 to the frame 11. The suspension assembly 22 includes two rear shock absorbers 221 distributed along the width direction of the electric all-terrain vehicle 100, the rear shock absorbers 221 are configured to reduce vibration transmission between the travel members 14 and the frame 11 to improve the driving comfort of the electric all-terrain vehicle 100. The charging port 192 is at least partially disposed between the two rear shock absorbers 221 and the charging port 192 is disposed below the cargo box assembly 21 so that the cargo box assembly 21 can serve to protect the charging port 192. Therefore, the charging port 192 is positioned as far away from the ground as possible. During the driving of the electric all-terrain vehicle 100, mud and sand can be avoided from entering the charging port 192, resulting in damage to the charging port 192, and the safety and stability of the charging port 192 can be improved. The minimum distance D4 between the cargo box assembly 21 and the charging port 192 is greater than or equal to 7.6 cm and less than or equal to 14 cm. As an embodiment, the minimum distance D4 between the cargo box assembly 21 and the charging port 192 is greater than or equal to 8.6 cm and less than or equal to 13 cm. As an embodiment, the minimum distance D4 between the cargo box assembly 21 and the charging port 192 is greater than or equal to 9.7 cm and less than or equal to 11.9 cm. This distance arrangement can provide the charging port 192 and the cargo box assembly 21 with sufficient operating space to avoid interference between the charging port 192 and the cargo box assembly 21 due to an excessively small distance. This is beneficial to improving the operational stability of the charging port 192 and the cargo box assembly 21. In particular, it can avoid interference with the charging port 192 when the cargo box assembly 21 is turned upward. The charging port 192 is located at least partially above the rear wheels 142. It should be noted that during traveling of the electric all-terrain vehicle 100, the rear wheels 142 raise dust and sediment, and the sediment moves into the air due to inertia. The charging port 192 is disposed higher than the rear wheels 142 to prevent the charging port 192 from being impacted by mud and sand, thereby enhancing the safety and prolonging the service life of the charging port 192.

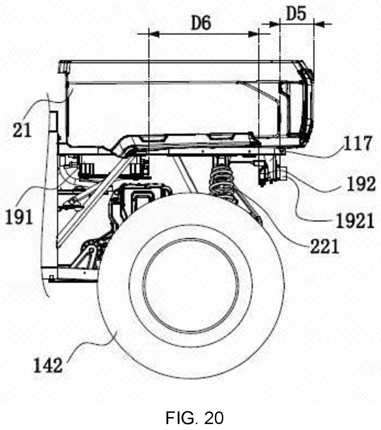

As shown in FIG. 19 and FIG. 20, as an embodiment, the projection of the charging port 192 on the reference plane 101 along the height direction of the electric all-terrain vehicle 100 is substantially located within the projection of the cargo box assembly 21 on the reference plane 101 along the height direction of the electric all-terrain vehicle 100. In this way, the charging port 192 is positioned entirely below the cargo box assembly 21, the cargo box assembly 21 can provide a shield for the charging port 192, effectively reducing the possibility of the charging port 192 being damaged by the influence of external forces, thereby ensuring the stability of the charging port 192. As an embodiment, the distance D5 between the rearmost end of the charging port 192 and the rearmost end of the cargo box assembly 21 in the length direction of the electric all-terrain vehicle 100 is greater than or equal to 58.8 mm and less than or equal to 109.2 mm. As an embodiment, the distance D5 between the rearmost end of the charging port 192 and the rearmost end of the cargo box assembly 21 in the length direction of the electric all-terrain vehicle 100 is greater than or equal to 67.2 mm and less than or equal to 100.8 mm. As an embodiment, the distance D5 between the rearmost end of the charging port 192 and the rearmost end of the cargo box assembly 21 in the length direction of the electric all-terrain vehicle 100 is greater than or equal to 75.6 mm and less than or equal to 92.4 mm. In this way, the positional relationship between the charging port 192 and the cargo box assembly 21 can be further restricted, which also makes the position of the charging port 192 more convenient for charging operation while enhancing the safety of the charging port 192, and improves the comfort of the electric all-terrain vehicle 100. This arrangement further allows the connection line between the charging and distributing device 191 and the charging port 192 to have a smoother overall routing, so as to prevent the connection line from being damaged due to friction, thereby improving the operational stability of the charging and distributing device 191 and the charging port 192.

As shown in FIG. 19 and FIG. 20, as an embodiment, in the length direction of the electric all-terrain vehicle 100, the charging and distributing device 191 is disposed in front of the charging port 192, and the minimum distance D6 between the charging and distributing device 191 and the charging port 192 is greater than or equal to 31.9 mm and less than or equal to 59.3 mm. As an embodiment, the minimum distance D6 between the charging and distributing device 191 and the charging port 192 is greater than or equal to 36.5 mm and less than or equal to 54.7 mm. As an embodiment, the minimum distance D6 between the charging and distributing device 191 and the charging port 192 is greater than or equal to 41 mm and less than or equal to 50.2 mm. The positional arrangement of the power charging and distributing device 191 and the charging port 192 can both enlarge the operating space of the charging port 192 and improve the working efficiency of charging. It is also possible to reduce the length of the connection line between the charging and distributing device 191 and the charging port 192, reduce the cost of the connection line, and improve the overall compactness and space utilization of the electric all-terrain vehicle 100.

In this embodiment, the frame 11 is further provided with a mounting bracket 117. The charging port 192 at least partially passes through the mounting bracket 117 and is fixedly connected to the mounting bracket 117, and the mounting bracket 117 is located at the rear of the frame 11. Therefore, the connection strength of the charging port 192 can be improved to avoid damage caused by collision between the charging port 192 and other portions during the movement of the electric all-terrain vehicle 100, so that the working life of the charging port can be improved.

As an optional embodiment, the charging port 192 is disposed substantially toward the rear lower side of the electric all-terrain vehicle 100. Therefore, the charging port 192 is disposed facing the rear lower side, which can prevent dust and rainwater from entering the charging port 192, thereby providing protection to the charging port 192. Furthermore, it can avoid a safety hazard of electric leakage caused by rainwater entering the charging port 192.

As an optional embodiment, the charging port 192 further includes a charging cover 1921. The charging cover 1921 is connected to the charging port 192. The charging cover 1921 provides additional protection for the charging port 192 to avoid sand, dust, rain and other contaminants from entering into the charging port 192, and to protect the charging port 192 and components connected to the charging port 192.

It should be understood that the specific embodiments described herein are merely intended to illustrate the present application and are not intended to limit it in any way. Based on the embodiments provided in the present application, all other embodiments that can be obtained by those of ordinary skill in the art without inventive effort shall fall within the scope of protection of the present application.

Obviously, the accompanying drawings are merely some examples or embodiments of the present application. It will be apparent to those of ordinary skill in the art that the present application may also be applied to other similar situations based on these drawings without the need for inventive effort. In addition, it can be understood that although the work carried out during the development process may be complex and time-consuming, certain modifications in design, manufacture or production, or the like, made by those of ordinary skill in the art based on the technical disclosure of the present application are merely routine technical means and should not be regarded as an insufficiency of the disclosure of the present application.

The embodiments described above merely illustrate several embodiments of the present application. Although the description is provided in a relatively specific and detailed manner, it should not be construed as limiting the scope of protection of the present application. It should be noted that those of ordinary skill in the art may make various modifications and improvements without departing from the concept of the present application, and all such modifications and improvements fall within the protection scope of the present application. Therefore, the scope of protection of the present application shall be defined by the appended claims.

## Claims

1. An electric all-terrain vehicle comprising:
a frame;
a drive assembly supported by the frame, the drive assembly comprising a drive motor and a reducer connected to the drive motor in a transmission mode;
a transmission system comprising a front drive axle, a rear drive axle and a propeller shaft, the propeller shaft is connected to the front drive axle in a transmission mode, and the rear drive axle is connected to the reducer in a transmission mode;
travel members comprising a pair of front wheels and a pair of rear wheels positioned at least partially below the frame;
a seat assembly connected to the frame; and
a power battery for supplying electric power to the drive motor;
wherein a reference plane is defined as being perpendicular to the height direction of the electric all-terrain vehicle, a projection of the seat assembly on the reference plane along the height direction of the electric all-terrain vehicle is defined as a seat projection, a projection of the power battery on the reference plane along the height direction of the electric all-terrain vehicle is defined as a battery projection, the seat projection is at least partially located in front of the battery projection, a ratio of the area of the portion where the battery projection overlaps with the seat projection to the area of the seat projection is greater than or equal to 0.52 and less than or equal to 1; a longitudinal plane is defined as being perpendicular to the width direction of the electric all-terrain vehicle and passing through a center of the width of the electric all-terrain vehicle, the drive motor is located on one side of the longitudinal plane, the minimum distance between the drive motor and the longitudinal plane is greater than or equal to 70 mm and less than or equal to 140 mm.

2. The electric all-terrain vehicle of claim 1, wherein the propeller shaft is at least partially located below the power battery.

3. The electric all-terrain vehicle of claim 2, wherein the front drive axle, the rear drive axle and the power battery are aligned along a length direction of the electric all-terrain vehicle, the power battery is positioned between the front drive axle and the rear drive axle.

4. The electric all-terrain vehicle of claim 3, wherein the power battery defines an inwardly recessed accommodation portion, the propeller shaft is at least partially disposed within the accommodation portion.

5. The electric all-terrain vehicle of claim 4, wherein the propeller shaft at least partially overlaps with the power battery when viewed along a width direction of the electric all-terrain vehicle; and the propeller shaft at least partially overlaps with the power battery when viewed along a height direction of the electric all-terrain vehicle.

6. The electric all-terrain vehicle of claim 5, wherein the power battery comprises a battery housing, the battery housing comprises an upper housing and a lower housing distributed along the height direction of the electric all-terrain vehicle; the accommodation portion is defined at the bottom of the lower housing; the frame is provided with a battery base, the lower housing is provided with a mount, and when the power battery is connected to the frame, the mount is fixedly connected to the battery base.

7. The electric all-terrain vehicle of claim 6, wherein the mount is provided with a plurality of connecting portions and lifting portions for lifting the power battery, when the power battery is connected to the frame, the connecting portions are fixedly connected to the battery base.

8. The electric all-terrain vehicle of claim 1, wherein the front wheels comprise a first front wheel and a second front wheel distributed along the width direction of the electric all-terrain vehicle, the rear wheels comprise a first rear wheel and a second rear wheel distributed along the width direction of the electric all-terrain vehicle, and defining the area enclosed by the center point of the first front wheel, the center point of the second front wheel, the center point of the first rear wheel, and the center point of the second rear wheel in sequential connection as a wheel area, and defining the projection of the wheel area on the reference plane along the height direction of the electric all-terrain vehicle as a wheel projection area, the battery projection is substantially located within the wheel projection area and the ratio of the area of the battery projection to the area of the wheel projection area is greater than or equal to 0.09 and less than or equal to0.17.

9. The electric all-terrain vehicle of claim 1, wherein the ratio of a maximum length of the power battery in a width direction of the electric all-terrain vehicle to a maximum length of the frame in a width direction of the electric all-terrain vehicle is greater than or equal to 0.5 and less than or equal to 1.

10. The electric all-terrain vehicle of claim 1, wherein the electric all-terrain vehicle further comprises a support cradle, the support cradle comprises hanging members disposed between the drive motor and the frame, one end of the hanging member is fixedly connected to the frame, and the other end of the support member is fixedly connected to the drive motor; the support members comprises a first hanging member, a second hanging member and a third hanging member; the second hanging member is located behind the first hanging member and the third hanging member; the first hanging member, the second hanging member and the third hanging member are in a triangularly distributed.

11. The electric all-terrain vehicle of claim 10, wherein the second hanging member is at least partially disposed on the reference plane, and both the first hanging member and the third hanging member are disposed below the reference plane.

12. The electric all-terrain vehicle of claim 11, wherein the electric all-terrain vehicle further comprises an installation housing; the drive motor, the reducer, and the rear drive axle are all disposed in the installation housing, the hanging member is connected to the installation housing.

13. The electric all-terrain vehicle of claim 11, wherein the first hanging member is disposed on the left side of the longitudinal plane, the third hanging member is disposed on the right side of the longitudinal plane, the longitudinal plane passes through the second hanging member.

14. The electric all-terrain vehicle of claim 13, wherein the first hanging member is fixedly connected to the drive motor by fasteners, a contact surface between the first hanging member and the drive motor is defined as a first contact surface, the first contact surface is substantially parallel to the longitudinal plane.

15. The electric all-terrain vehicle of claim 14, wherein the second hanging member is fixedly connected to the reducer by fasteners, a contact surface between the second hanging member and the reducer is defined as a second contact surface, a plane perpendicular to the length direction of the electric all-terrain vehicle is defined as a transverse plane, the second contact surface is substantially parallel to the horizontal plane.

16. The electric all-terrain vehicle of claim 15, wherein the third hanging member is fixedly connected to the reducer by fasteners, a contact surface between the third hanging member and the reducer substantially conforms to the outer contour of the reducer.

17. The electric all-terrain vehicle of claim 10, wherein the drive motor and the reducer are distributed along a width direction of the electric all-terrain vehicle, the first hanging member is fixedly connected to the drive motor, and the second hanging member and third hanging member are fixedly connected to the reducer.

18. The electric all-terrain vehicle of claim 10, wherein the support cradle comprises a bushing for providing cushioning and a bracket for connecting the drive motor, the bracket is connected to the frame through the bushing, the bushing is at least partially disposed between the frame and the bracket.

19. The electric all-terrain vehicle of claim 10, wherein the frame further comprises connecting brackets, the support cradle is disposed between the two connecting brackets, the support cradle is fixedly connected to the connecting brackets by fasteners.

20. An electric all-terrain vehicle comprising:
a frame;
a drive assembly supported by the frame, the drive assembly comprising a drive motor and a reducer connected to the drive motor in a transmission mode;
a transmission system comprising a front drive axle, a rear drive axle and a propeller shaft, the propeller shaft is connected to the front drive axle in a transmission mode, and the rear drive axle is connected to the reducer in a transmission mode;
travel members comprising a pair of front wheels and a pair of rear wheels positioned at least partially below the frame;
a power battery for supplying electric power to the drive motor;
wherein the reducer is connected to the drive motor and the rear drive axle in a transmission mode, and the reducer is further connected to the propeller shaft in a transmission mode to transmit a driving force generated by a powertrain to the front drive axle; a longitudinal plane is defined as being perpendicular to the width direction of the electric all-terrain vehicle and passing through a center of the width of the electric all-terrain vehicle, the reducer and the rear drive axle at least partially passes across the longitudinal plane; the ratio of the distance between the leftmost end of the reducer and the longitudinal plane to the distance between the rightmost end of the reducer and the longitudinal plane is greater than or equal to 0.66 and less than or equal to 0.8; the drive motor is located on one side of the longitudinal plane, and the leftmost end of the reducer is fixedly connected to the drive motor; and the minimum distance between the leftmost end of the reducer and the longitudinal plane is greater than or equal to 70 mm and less than or equal to 140 mm.

21. The electric all-terrain vehicle of claim 20, wherein the reducer comprises a power input shaft and a power transmission shaft, the power input shaft is connected to the power transmission shaft in a transmission mode, the power input shaft is connected to the drive motor in a transmission mode, the power transmission shaft is connected to the propeller shaft and the rear drive axle in a transmission mode, the power input shaft and the power transmission shaft are arranged in parallel, and a distance between the axis of the power input shaft and the axis of the power transmission shaft is greater than or equal to 74 mm and less than or equal to 138 mm.

22. The electric all-terrain vehicle of claim 21, wherein the front drive axle comprises a front bevel gear, the propeller shaft comprises a ring gear, the power transmission shaft comprises a bevel gear; one end of the propeller shaft is connected to the front bevel gear in a transmission mode, the other end of the propeller shaft is connected to the bevel gear in a transmission mode through the ring gear, the bevel gear and the front bevel gear are both located on one side of the longitudinal plane.

23. The electric all-terrain vehicle of claim 22, wherein the rear drive axle comprises a rear bevel gear, the power transmission shaft further comprises a power output gear, the power output gear is connected to the rear bevel gear in a transmission mode, the power output gear and the rear bevel gear are both located on one side of the longitudinal plane.

24. The electric all-terrain vehicle of claim 23, wherein the front bevel gear is disposed substantially in front of the propeller shaft; the bevel gear, the power output gear and the rear bevel gear are disposed substantially behind the propeller shaft; the bevel gear, the front bevel gear, the power output gear and the rear bevel gear are disposed to the right side of the longitudinal plane.

25. The electric all-terrain vehicle of claim 24, wherein the electric all-terrain vehicle has a four-wheel drive mode and a rear-wheel drive mode, wherein when the ring gear is engaged with the bevel gear, the reducer transmits power to the propeller shaft and the electric all-terrain vehicle is in a four-wheel drive mode; and wherein when the ring gear is separated from the bevel gear, the reducer and the propeller shaft are separated, and the electric all-terrain vehicle is switched from the four-wheel drive mode to the rear-wheel drive mode.

26. The electric all-terrain vehicle of claim 21, wherein the electric all-terrain vehicle further comprises an installation housing; the drive motor, the reducer, and the rear drive axle are all disposed within the installation housing.

27. The electric all-terrain vehicle of claim 21, wherein the electric all-terrain further comprises a charging and distributing device at least partially connected to the power battery, the charging and distributing device is located above the drive motor.

28. The electric all-terrain vehicle of claim 27, wherein a minimum distance between the power charging and distributing device and the drive motor along a height direction of the electric all-terrain vehicle is greater than or equal to 2 cm and less than or equal to 4 cm.

29. An electric all-terrain vehicle comprising:
a frame;
a powertrain supported by the frame;
a transmission system connected to the powertrain in a transmission mode;
a travel members comprising a pair of front wheels and a pair of rear wheels positioned at least partially below the frame;
a seat assembly connected to the frame;
a battery assembly comprising a power battery configured to provide energy for the powertrain;
wherein a reference plane perpendicular to the height direction of the electric all-terrain vehicle is defined, a projection of the seat assembly on the reference plane along the height direction of the electric all-terrain vehicle is defined as a seat projection, a projection of the power battery on the reference plane along the height direction of the electric all-terrain vehicle is defined as a battery projection, the seat projection is at least partially located in front of the battery projection, the ratio of the area of the portion of the battery projection overlaps the seat projection to the area of the seat projection is greater than or equal to 0.52 and less than or equal to 1.

30. The electric all-terrain vehicle of claim 29, wherein the transmission system comprises a front drive axle connected to the front wheels in a transmission mode and a rear drive axle connected to the rear wheels in a transmission mode, the transmission system further comprises a propeller shaft that connects the front drive axle to the powertrain, the propeller shaft is at least partially located below the power battery.

31. The electric all-terrain vehicle of claim 30, wherein the front drive axle, the rear drive axle and the power battery are aligned along the length of the electric all-terrain vehicle, the power battery is positioned between the front drive axle and the rear drive axle.

32. The electric all-terrain vehicle of claim 31, wherein the power battery comprises an inwardly recessed accommodation portion, the propeller shaft is at least partially disposed within the accommodation portion.

33. The electric all-terrain vehicle of claim 32, wherein the propeller shaft at least partially overlaps with the power battery are when viewed along a width direction of the electric all-terrain vehicle; the propeller shaft at least partially overlaps with the power battery when viewed along a height direction of the electric all-terrain vehicle.

34. The electric all-terrain vehicle of claim 33, wherein the power battery comprises a battery housing, the battery housing comprises an upper housing and a lower housing distributed in a height direction of the electric all-terrain vehicle, the accommodation portion is defined at the bottom of the lower housing, the frame is provided with a battery base, the lower housing is provided with a mount, and the mount is fixedly connected to the battery base when the power battery is connected to the frame.

35. The electric all-terrain vehicle of claim 34, wherein the mount is provided with a plurality of connecting portions and lifting portions for lifting the power battery, and the connecting portions are fixedly connected to the battery base when the power battery is connected to the frame.

36. The electric all-terrain vehicle of claim 29, wherein the front wheels comprise a first front wheel and a second front wheel distributed in a width direction of the electric all-terrain vehicle, and the rear wheels comprise a first rear wheel and a second rear wheel distributed in a width direction of the electric all-terrain vehicle; defining the area enclosed by the center point of the first front wheel, the center point of the second front wheel, the center point of the first rear wheel, and the center point of the second rear wheel in sequential connection as a wheel area, and defining the projection of the wheel area on the reference plane along the height direction of the electric all-terrain vehicle as a wheel projection area, the battery projection is substantially located within the wheel projection area and the ratio of the area of the battery projection to the area of the wheel projection area is greater than or equal to 0.09 and less than or equal to 0.17.

37. The electric all-terrain vehicle of claim 29, wherein the ratio of a maximum length of the power battery in the width direction of the electric all-terrain vehicle to a maximum length of the frame in the width direction of the electric all-terrain vehicle is greater than or equal to 0.5 and less than or equal to 1.

38. The electric all-terrain vehicle of claim 29, wherein the transmission system comprises a rear drive axle coupled to the rear wheels; the battery assembly further comprises a temperature control device; the power battery, the temperature control device, and the rear drive axle are disposed substantially along the length of the electric all-terrain vehicle; the temperature control device is disposed at least partially between the power battery and the rear drive axle.

39. The electric all-terrain vehicle of claim 38, wherein the temperature control device comprises a circulation pipeline for regulating the temperature of the power battery; the temperature control device comprises a cooling member for cooling the coolant within the circulation pipeline and a heating member for heating the coolant within the circulation pipeline; the circulation pipeline comprises an inner circulation pipeline and an external circulation pipeline; the temperature control device further comprises a heat exchanger, the inner circulation pipeline is disposed within the power battery, the external circulation pipeline is connected to the heating member and the heat exchanger; the temperature control device further comprises a refrigerant pipeline connected to the cooling member, the refrigerant pipeline is connected to the heat exchanger, heat exchange between the circulation pipeline and the refrigerant pipeline is achieved through the heat exchanger.

40. The electric all-terrain vehicle of claim 39, wherein the power battery is provided with a connection port, the connection port is located at the rear of the power battery, and the outer circulation pipeline is connected to the inner circulation pipeline through the connection port.

41. The electric all-terrain vehicle of claim 39, wherein the heat exchanger is disposed above the heating member and the cooling member, the heating member is disposed in front of the cooling member.

42. The electric all-terrain vehicle of claim 39, wherein the temperature control device further comprises a water pump, the water pump is located at least partially in front of the cooling member, the water pump is located to the left of the heating member, and the water pump is in fluid communication with the external circulation pipeline.

43. The electric all-terrain vehicle of claim 39, wherein the temperature control device further comprises a water reservoir, the water reservoir is connected to the external circulation pipeline, the water reservoir is used to balance coolant within the circulation pipeline.

44. The electric all-terrain vehicle of claim 43, wherein the temperature control device further comprises a water pump, the water reservoir is at least partially located above the water pump, the water reservoir at least partially overlap with the water pump when viewed along the height direction of the electric all-terrain vehicle.

45. The electric all-terrain vehicle of claim 44, wherein the temperature control device further comprises a radiator, the refrigerant pipeline is in fluid communication with the radiator

46. The electric all-terrain vehicle of claim 38, wherein the power battery comprises a battery housing, the battery housing comprises an upper housing and a lower housing distributed along the height direction of the electric all-terrain vehicle, the upper housing and the lower housing are provided in a fixed connection; the frame is provided with a battery base, the lower housing is provided with a mount, and the mount is fixedly connected to the battery base when the power battery is connected to the frame.

47. The electric all-terrain vehicle of claim 46, wherein the mount is provided with the connecting portions and lifting portions for lifting the power battery, the connecting portions are fixedly connected to the battery base when the power battery is connected to the frame.

48. The electric all-terrain vehicle of claim 29, wherein the electric all-terrain vehicle comprises a control system, the control system comprises a vehicle controller, the battery assembly further comprises a temperature control device, the power battery comprises a circulation pipeline for regulating the temperature of the power battery, the temperature control device comprises a heating member for heating the coolant within the circulation pipeline and a cooling member for cooling the coolant within the circulation pipeline; the power battery is provided with a battery temperature sensor for detecting temperature, and the temperature control device comprises an ambient temperature sensor for detecting ambient temperature; the cooling member, the heating member, the battery temperature sensor, and the ambient temperature sensor are all configured to be in communication connection with the vehicle controller.

49. The electric all-terrain vehicle of claim 48, wherein the vehicle controller comprises a battery thermal management module; the battery assembly and the temperature control assembly are both in communication with the battery thermal management module.

50. The electric all-terrain vehicle of claim 49, wherein the communication connections are implemented in a CAN communication connection or LIN communication connection.

51. The electric all-terrain vehicle of claim 48, wherein the circulation pipeline further comprises a water pump for providing pressure to the circulation pipeline, the water pump is in communication connection with the vehicle controller; when the cooling member or the heating member is in operation, the vehicle controller sends a working command to the water pump for providing water pressure to the circulation management.

52. The electric all-terrain vehicle of claim 48, wherein the temperature control device further comprises a refrigerant pipeline in fluid communication with the cooling member and a pressure sensor disposed in the refrigerant pipeline, the ambient temperature sensor and the pressure sensor are both configured to be in fluid communication connection with the vehicle controller.

53. An electric all-terrain vehicle comprising:
a frame;
a powertrain comprising a drive assembly;
a transmission system connected to the powertrain in a transmission mode;
travel members comprising a pair of front wheels and a pair of rear wheels positioned at least partially below the frame;
a seat assembly connected to the frame;
a battery assembly comprising a power battery configured to provide energy for the powertrain; and
a cargo box assembly positioned at the rear of the frame and connected to the frame;
wherein a reference plane perpendicular to the height direction of the electric all-terrain vehicle is defined, a projection of the seat assembly on the reference plane along the height direction of the electric all-terrain vehicle is defined as a seat projection, a projection of the power battery on the reference plane along the height direction of the electric all-terrain vehicle is defined as a battery projection, the seat projection is at least partially located in front of the battery projection, the ratio of the area of the portion of the battery projection overlaps the seat projection to the area of the seat projection is greater than or equal to 0.52 and less than or equal to 1; the electric all-terrain vehicle further comprises a charging and distributing device, the charging and distributing device is integrally with a charging unit for converting alternating current to direct current, a converting unit for converting high voltage to low voltage, and a distributing unit for supplying power; the charging and distributing unit is electrically connected to the power battery and the drive motor, respectively; the charging and distributing device is located above the drive motor, the charging and distributing device is located behind the power battery, and the charging and distributing device is further located below the cargo box assembly.

54. The electric all-terrain vehicle of claim 53, wherein the transmission system comprises a front drive axle connected to the front wheels in a transmission mode and a rear drive axle connected to the rear wheels in a transmission mode; the transmission system further comprises the propeller shaft connecting the front drive axle to the powertrain, the propeller shaft is at least partially located below the power battery.

55. The electric all-terrain vehicle of claim 54, wherein the front drive axle, the rear drive axle, and the power battery are distributed along the length of the electric all-terrain vehicle, the power battery is positioned between the front drive axle and the rear drive axle.

56. The electric all-terrain vehicle of claim 55, wherein the power battery defines an inwardly recessed accommodation portion, the propeller shaft is at least partially disposed within the accommodation portion.

57. The electric all-terrain vehicle of claim 56, wherein the propeller shaft at least partially overlaps with the power battery when viewed along the width direction of the electric all-terrain vehicle; and the propeller shaft at least partially overlaps with the power battery when viewed along the height direction of the electric all-terrain vehicle.

58. The electric all-terrain vehicle of claim 57, wherein the power battery comprises a battery housing, the battery housing comprises an upper housing and a lower housing distributed in a height direction of the electric all-terrain vehicle, the accommodation portion is provided at the bottom of the lower housing; the frame is provided with a battery base, the lower housing is provided with a mount, and the mount is fixedly connected to the battery base when the power battery is connected to the frame.

59. The electric all-terrain vehicle of claim 58, wherein the mount is provided with a plurality of connecting portions and lifting portions for lifting the power battery, the connecting portions is fixedly connected to the battery base when the power battery is connected to the frame.

60. The electric all-terrain vehicle of claim 53, wherein the front wheels comprise a first front wheel and a second front wheel distributed in a width direction of the electric all-terrain vehicle, and the rear wheels comprise a first rear wheel and a second rear wheel distributed in a width direction of the electric all-terrain vehicle; defining the area enclosed by the center point of the first front wheel, the center point of the second front wheel, the center point of the first rear wheel, and the center point of the second rear wheel in sequential connection as a wheel area, and defining the projection of the wheel area on the reference plane along the height direction of the electric all-terrain vehicle as a wheel projection area, the battery projection is substantially located within the wheel projection area, and the ratio of the area of the battery projection to the area of the wheel projection area is greater than or equal to 0.09 and less than or equal to 0.17.

61. The electric all-terrain vehicle of claim 53, wherein the ratio of a maximum length of the power battery in the width direction of the electric all-terrain vehicle to a maximum length of the frame in the width direction of the electric all-terrain vehicle is greater than or equal to 0.5 and less than or equal to 1.

62. The electric all-terrain vehicle of claim 53, wherein, when viewed in the height direction of the electric all-terrain vehicle, the power charging and distributing device, the drive motor, and the cargo box assembly at least partially overlap.

63. The electric all-terrain vehicle of claim 53, wherein a minimum distance between the power charging and distributing device and the drive motor is greater than or equal to 2 cm and less than or equal to 4 cm.

64. The electric all-terrain vehicle of claim 53, wherein the charging and distributing device is provided with a battery port connected to the power battery and a motor port connected to the drive motor; the battery port is in front of of the charging and distributing device, and the motor port is located below the charging and distributing device.

65. The electric all-terrain vehicle of claim 53, wherein the electric all-terrain vehicle further comprises a charging port electrically connected to the charging and distributing device; when the electric all-terrain vehicle is in a charging state, the charging port is connected to an external power source via an external charging cable.

66. The electric all-terrain vehicle of claim 53, wherein the electric all-terrain vehicle further comprises a charging and distributing bracket, the charging and distributing bracket is located behind the power battery, the frame comprises a rear barrier structure positioned behind the seat assembly, the charging and distributing bracket is connected to the rear barrier structure, and the charging and distributing device is connected to the charging and distributing bracket.

67. The electric all-terrain vehicle of claim 66, wherein the charging and distributing bracket comprises a first bracket extending in the width direction of the electric all-terrain vehicle, the first bracket of the rear barrier structure is fixedly connected to the frame, the first bracket is provided with a fixing seat for fixing the charging and distributing device.

68. The electric all-terrain vehicle of claim 67, wherein the first bracket comprises a first fixing portion and a second fixing portion disposed at either end; the frame further comprises longitudinal beams disposed on either side of the rear barrier structure and extending substantially in the height direction of the electric all-terrain vehicle, the first fixing portion is fixedly connected to the longitudinal beams on one side, and the second fixing portion is fixedly connected to the longitudinal beams on the other side.

69. The electric all-terrain vehicle of claim 68, wherein the charging and distributing bracket further comprises a second bracket extending substantially in the height direction of the electric all-terrain vehicle; one end of the second bracket is fixedly connected to the first bracket, and the other end of the second bracket is fixedly connected to the rear barrier structure, the connection point between the second bracket and the first bracket is substantially located at the middle of the first bracket.

70. The electric all-terrain vehicle of claim 69, wherein the charging and distributing device further comprises cooling pipeline for flow of coolant, the battery assembly further comprises a temperature control device, the temperature control device comprises a radiator, the cooling pipeline is at least partially disposed within the charging and distributing device, the cooling pipeline is connected to the radiator.

71. The electric all-terrain vehicle of claim 53, wherein the charging and distributing device comprises a charging and distributing bracket, the charging and distributing bracket is provided with a fixing seat, the charging and distributing device is at least partially disposed on and connected to the fixing seat; the charging and distributing bracket is at least partially located above the drive assembly; when viewed along the height direction of the electric all-terrain vehicle, the charging and distributing bracket at least partially overlap with the drive assembly .

72. The electric all-terrain vehicle of claim 71, wherein the charging and distributing bracket comprises a first bracket connected to the frame, the first bracket extends in the width direction of the electric all-terrain vehicle, and the fixing seat is located on the first bracket and fixedly connected to the first bracket.

73. The electric all-terrain vehicle of claim 72, wherein the frame defines a passenger cabin and a rear cabin attached to the passenger cabin, the frame comprises a rear barrier structure for separating the passenger cabin from the rear cabin, the first bracket is fixedly connected to the rear barrier structure.

74. The electric all-terrain vehicle of claim 73, wherein when viewed in the height direction of the electric all-terrain vehicle, the rear barrier structure is at least partially disposed behind the first bracket.

75. The electric all-terrain vehicle of claim 74, wherein two ends of the first bracket are respectively provided with a first fixing portion and a second fixing portion, and both the first fixing portion and the second fixing portion are fixedly connected to the frame.

76. The electric all-terrain vehicle of claim 75, wherein the frame further comprises longitudinal beams located on both sides of the rear barrier structure and extending substantially along the height direction of the electric all-terrain vehicle; the first fixing portion of the rear barrier structure is fixedly connected to the longitudinal beams on one side, the second fixing portion is fixedly connected to the longitudinal beams on the other side.

77. The electric all-terrain vehicle of claim 76, wherein the longitudinal beam comprises a first longitudinal beam portion and a second longitudinal beam portion; two ends of the first fixing portion are respectively connected to the first longitudinal beam portion and the second longitudinal beam portion of the longitudinal beam on one side, and two ends of the second fixing portion are respectively connected to the first longitudinal beam portion and the second longitudinal beam portion of the longitudinal beam on the other side.

78. The electric all-terrain vehicle of claim 76, wherein the charging and distributing bracket further comprises a second bracket, the second bracket extends substantially in the height direction of the electric all-terrain vehicle, one end of the second bracket is connected to the first bracket, and the other end of the second bracket is connected to the rear barrier structure.

79. The electric all-terrain vehicle of claim 78, wherein the second bracket is provided in a curved shape, the connection point between the second bracket and the first bracket is substantially located at a middle portion of the first bracket.

80. The electric all-terrain vehicle of claim 71, wherein the drive assembly comprises a drive motor, the drive motor is connected to the travel members in a transmission mode, when viewed along the height direction of the electric all-terrain vehicle, the charging and distributing bracket and the drive motor are at least partially overlapped; the charging and distributing bracket is at least partially located above the drive motor, a minimum distance between the charging and distributing bracket and the drive motor is greater than or equal to 2 cm and less than or equal to 3.5 cm.

81. The electric all-terrain vehicle of claim 53, wherein the electric all-terrain vehicle further comprises a charging and distributing integrated system, the charging and distributing integrated system comprises a charging and distributing device and a charging port electrically connected to the charging and distributing device; the charging port is located behind and connected to the frame, the charging port is at least partially located above the rear wheels, and the charging port is further located below the cargo box assembly.

82. The electric all-terrain vehicle of claim 81, wherein the frame is provided with a mounting bracket, and the charging port at least partially passes through the mounting bracket and is fixedly connected to the mounting bracket.

83. The electric all-terrain vehicle of claim 81, wherein a minimum distance between the cargo box assembly and the charging port is greater than or equal to 7.6 cm and less than or equal to 14 cm.

84. The electric all-terrain vehicle of claim 81, wherein the electric all-terrain vehicle further comprises a suspension assembly, the suspension assembly comprises two rear shock absorbers distributed in a width direction of the electric all-terrain vehicle, the charging port is at least partially disposed between the two the rear shock absorbers.

85. The electric all-terrain vehicle of claim 81, wherein a reference plane perpendicular to the height direction of the electric all-terrain vehicle is defined, and wherein a projection of the charging port on the reference plane along the height direction of the electric all-terrain vehicle lies substantially within a projection of the cargo box assembly on the reference plane along the height direction of the electric all-terrain vehicle.

86. The electric all-terrain vehicle of claim 81, wherein in a length direction of the electric all-terrain vehicle, a distance between a rearmost end of the charging port and a rearmost end of the cargo box assembly is greater than or equal to 58.8 mm and less than or equal to 109.2 mm.

87. The electric all-terrain vehicle of claim 86, wherein the charging and distributing device is located on a front side of the charging port, and a minimum distance between the charging and distributing device and the charging port is greater than or equal to 31.9 cm and less than or equal to 59.3 cm.

88. The electric all-terrain vehicle of claim 87, wherein the charging port further comprises a charging cover for providing protection for the charging port, the charging cover is connected to the charging port.
